(19) Europäisches Patentamt
European Patent Office
Office européen des brevets

(11) **EP 4 244 493 B1**

(12) **EUROPEAN PATENT SPECIFICATION**

(45) Date of publication and mention of the grant of the patent:
**22.07.2026 Bulletin 2026/30**

(21) Application number: **21892519.6**

(22) Date of filing: **15.09.2021**

(51) International Patent Classification (IPC):
***F16B 25/00*** *(2006.01)* ***F16B 43/00*** *(2006.01)*
***E04B 2/74*** *(2006.01)* *F16B 25/10* *(2006.01)*

(52) Cooperative Patent Classification (CPC):
**F16B 43/001; E04B 2/7457; F16B 25/0026;**
E04B 2/7412; F16B 25/106

(86) International application number:
**PCT/US2021/050373**

(87) International publication number:
**WO 2022/103483 (19.05.2022 Gazette 2022/20)**

(54) **ACOUSTICALLY ATTENUATING FASTENERS**

AKUSTISCH DÄMPFENDE BEFESTIGUNGSELEMENTE

ÉLÉMENTS DE FIXATION D’ATTÉNUATION ACOUSTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2020 US 202063113235 P**

(43) Date of publication of application:
**20.09.2023 Bulletin 2023/38**

(73) Proprietor: **Owens Corning Intellectual Capital, LLC**
**Toledo, OH 43659 (US)**

(72) Inventors:
- **BOONA, Isabel N.**
  **Hilliard, Ohio 43026 (US)**
- **O’LEARY, Robert J.**
  **Newark, Ohio 43055 (US)**
- **TAYLOR, Corey A.**
  **Columbus, Ohio 43205 (US)**
- **HERREMAN, Kevin M.**
  **Newark, Ohio 43055 (US)**

(74) Representative: **Novagraaf Group**
**Chemin de l’Echo 3**
**1213 Onex (CH)**

(56) References cited:
**EP-B1- 3 176 448**
**US-A- 5 141 375**
**US-A1- 2007 122 253**
**US-A1- 2011 305 540**
**US-B2- 7 695 226**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 244 493 B1

## Description

CROSS-REFERENCE TO RELATED APPLICATION(S)

This application claims priority to and any benefit of U.S. Provisional Application No. 63/113,235, filed November 13, 2020.

FIELD

The general inventive concepts relate to innovative fasteners and systems that use the fasteners to create an acoustically insulated room or space.

BACKGROUND

EP3176448B (to Friedrich Ossenberg Schule GmbH) describes a connecting element for the sealed connection and fastening of objects.

A common type of wall is formed by attaching drywall panels to framing members in the form of wall studs. The wall studs can be wood, metal, composite, or any other type of mounting substrate. The drywall panels are secured to the studs by a number of drywall screws. A conventional approach to achieving sound insulation of a room involves structurally decoupling or otherwise isolating the drywall from the wall studs. One technique for such structural decoupling relies on resilient channels. The resilient channels can be formed as long (e.g., 8-foot) metallic rails (1 foot = 305 mm). The resilient channels are inserted between the drywall and the studs to improve the sound insulation afforded by the drywall.

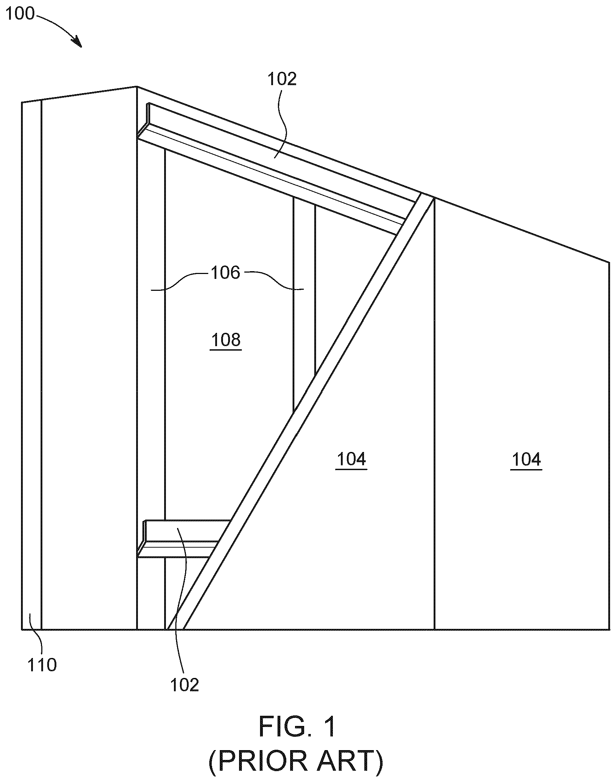

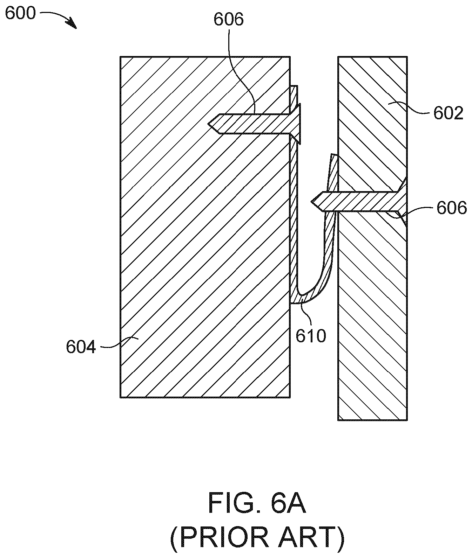

One such conventional installation 100 is illustrated in FIG. 1. In the installation 100, a pair of resilient channels 102 is situated between the drywall 104 (e.g., 1/2 inch gypsum boards) and the wall studs 106 (e.g., 2x4 wooden members) (1 inch = 25 mm). It should be noted that a bottom portion of each resilient channel 102 is connected to the studs 106, while a top portion of each resilient channel 102 is not connected to the studs 106, which achieves the decoupling of the drywall 104 from the studs 106 (see FIG. 6A). Additionally, thermal insulation 108 (e.g., fiberglass batts) can be situated in the cavities formed between adjacent studs 106. Drywall 110 (e.g., 1/2 inch gypsum boards) can be directedly connected to the wall studs 106 on the opposite side of the wall, i.e., on the side opposite the resilient channels 102.

These resilient channels represent an effective but complex, labor intensive, and expensive option for creating a high transmission loss wall. Additionally, the detailed installation of the resilient channels can be time intensive (particularly in retrofitting applications) and more prone to installation errors. Thus, there is an unmet need for an improved system for creating an acoustically isolated room.

SUMMARY

The general inventive concepts relate to fasteners and systems that use the fasteners to create an acoustically insulated room or space.

A first aspect of the present invention relates to a fastener for securing a wall panel to a framing member, as defined in claim 1. Particular embodiments are defined in dependent claims 2 to 14.

A second aspect of the present invention relates to the use of the claimed fastener, as defined in claim 15.

In one exemplary embodiment, a fastener for securing a wall panel to a framing member is disclosed. The term "wall panel" is used herein to refer to any covering panel that interfaces with framing members to at least partially close off or otherwise cover a space between the framing members. The fastener includes a head; a shaft; and a sleeve, wherein the shaft extends from a lower surface of the head, wherein a first portion of the shaft includes a helical thread, wherein the sleeve surrounds a second portion of the shaft, and wherein the sleeve is made of an elastomeric material having a shore durometer hardness in the range of 10 to 30. In general, the head and the shaft are part of a screw. In some exemplary embodiments, the screw is a pocket-hole screw. In some exemplary embodiments, the screw is a lath screw. In some exemplary embodiments, the screw is a drywall screw. In some exemplary embodiments, the screw is a Phillips wafer head screw. In some exemplary embodiments, the shaft lacks any helical thread, such that the fastener is a nail or nail-like member.

In some exemplary embodiments, the sleeve is fixed to the second portion of the shaft.

In some exemplary embodiments, the sleeve surrounds the first portion of the shaft in an uninstalled state of the fastener, and wherein the sleeve surrounds the second portion of the shaft in an installed state of the fastener.

In some exemplary embodiments, the sleeve surrounds more of the first portion of the shaft than the second portion of the shaft in an uninstalled state of the fastener, and wherein the sleeve surrounds more of the second portion of the shaft than the first portion of the shaft in an installed state of the fastener.

In some exemplary embodiments, a gap separates the first portion and the second portion.

In some exemplary embodiments, the first portion abuts the second portion.

In some exemplary embodiments, the first portion and the second portion overlap.

In some exemplary embodiments, at least a portion of the sleeve is a conical frustrum having a first end defining a maximum width of the sleeve and a second end defining a minimum width of the sleeve.

In some exemplary embodiments, the sleeve has a first end defining a maximum width of the sleeve and a second end defining a minimum width of the sleeve, wherein a first portion of the sleeve is a conical frustrum extending from the second end to a point (plane) between the first end and the second end, and wherein a second portion of the sleeve is a cylinder extending from the point to the first end. A diameter of the cylinder corresponds to the maximum width of the sleeve. In some exemplary embodiments, the point is equidistant from the first end and the second end. In some exemplary embodiments, the point is closer to the first end than the second end. In some exemplary embodiments, the point is closer to the second end than the first end.

In some exemplary embodiments, the maximum width of the sleeve is equal to a maximum width of the head.

In some exemplary embodiments, the maximum width of the sleeve is less than a maximum width of the head.

In some exemplary embodiments, the maximum width of the sleeve is greater than a maximum width of the head.

In some exemplary embodiments, the maximum width of the sleeve is in the range of 0.125 inches (3.0 mm) to 0.5 inches (12.5 mm).

In some exemplary embodiments, the minimum width of the sleeve is in the range of 0.125 inches (3.0 mm) to less than 0.5 inches (12.5 mm).

In some exemplary embodiments, the first end of the sleeve abuts the lower surface of the head.

In some exemplary embodiments, a slope of the conical frustrum from the maximum width to the minimum width is in the range of 0.1 degrees to 30 degrees.

In some exemplary embodiments, a slope of the conical frustrum from the maximum width to the minimum width is in the range of 3 degrees to 20 degrees.

According to the invention, a length of the sleeve is in the range of 0.25 inches (6.0 mm) to 1 inch (25.4 mm).

In some exemplary embodiments, a length of the sleeve is less than one half the length of the shaft.

In some exemplary embodiments, a length of the sleeve is equal to one half the length of the shaft.

In some exemplary embodiments, a length of the sleeve is greater than one half the length of the shaft.

In some exemplary embodiments, a width of the sleeve is the same along a length of the sleeve, the width of the sleeve is in the range of 0.125 inches (3.0 mm) to 0.5 inches (12.5 mm), and the length of the sleeve is in the range of 0.25 inches (6.0 mm) to 1 inch (25.4 mm).

In some exemplary embodiments, the elastomeric material is urethane.

In some exemplary embodiments, the elastomeric material is silicone.

In some exemplary embodiments, the sleeve comprises a first portion made of a first elastomeric material having a shore durometer hardness in the range of 10 to 30 and a second portion made of a second elastomeric material having a shore durometer hardness in the range of 10 to 30.

In some exemplary embodiments, the elastomeric material is an unsaturated rubber that can be cured by sulfur vulcanization including, but not limited to, natural polyisoprene: cis-1,4-polyisoprene natural rubber (NR) and trans-1,4-polyisoprene gutta-percha; synthetic polyisoprene (IR for isoprene rubber); polybutadiene (BR for butadiene rubber); chloroprene rubber (CR), polychloroprene, Neoprene, Baypren, etc.; butyl rubber (copolymer of isobutene and isoprene, IIR); halogenated butyl rubbers (chloro butyl rubber: CIIR; bromo butyl rubber: BIIR); styrene-butadiene rubber (copolymer of styrene and butadiene, SBR); nitrile rubber (copolymer of butadiene and acrylonitrile, NBR), also called Buna N rubbers; and hydrogenated nitrile rubbers (HNBR), Therban and Zetpol.

In some exemplary embodiments, the elastomeric material is an unsaturated rubber that is cured by non-sulfur vulcanization.

In some exemplary embodiments, the elastomeric material is a saturated rubber that cannot be cured by sulfur vulcanization including, but not limited to, ethylene propylene rubber (EPM), a copolymer of ethene and propene; ethylene propylene diene rubber (EPDM), a terpolymer of ethylene, propylene, and a diene-component; epichlorohydrin rubber (ECO); polyacrylic rubber (ACM, ABR); silicone rubber (SI, Q, VMQ); fluorosilicone rubber (FVMQ); fluoroelastomers (FKM, FEPM), Viton, Tecnoflon, Fluorel, Aflas, and Dai-El; perfluoroelastomers (FFKM), Tecnoflon PFR, Kalrez, Chemraz, and Perlast; polyether block amides (PEBA); chlorosulfonated polyethylene (CSM, Hypalon); and ethylene-vinyl acetate (EVA).

In some exemplary embodiments, the elastomeric material is a 4S elastomer including, but not limited to, thermoplastic elastomers (TPE); the proteins resilin and elastin; polysulfide rubber; elastolefin, elastic fiber used in fabric production; and poly(dichlorophosphazene).

In some exemplary embodiments, the sleeve is coaxial with the shaft.

In some exemplary embodiments, a length of the shaft is in the range of 0.25 inches (6.0 mm) to 1.625 inches (41.28 mm).

In some exemplary embodiments, the head and the shaft are made of metal.

In some exemplary embodiments, the head and the shaft are made of a composite material.

In some exemplary embodiments, an upper surface of the head has an indentation to facilitate rotation of the fastener by a tool that interfaces with the indentation.

In some exemplary embodiments, the framing member is any structural support for the wall.

In some exemplary embodiments, the framing member is a wall stud.

In some exemplary embodiments, the wall stud is made of wood.

In some exemplary embodiments, the wall stud is made of metal.

In some exemplary embodiments, the wall stud is made of a composite material.

In some exemplary embodiments, the wall panel is a drywall panel.

In some exemplary embodiments, a length of the sleeve is equal to a thickness of the drywall panel.

In some exemplary embodiments, a length of the sleeve is less than a thickness of the drywall panel.

In some exemplary embodiments, the wall panel is made of oriented strand board (OSB), plywood, medium density fiberboard (MDF), resin, plastic, wood, metal, glass, melamine, or stone.

In some exemplary embodiments, the wall panel is made of a composite material.

In some exemplary embodiments, the wall panel is made of a laminated material.

In one exemplary embodiment, a method of securing a wall panel to a framing member using a fastener is disclosed. The method comprises rotating the fastener such that it bores through the wall panel and engages the framing member to fix the wall panel to the framing member, wherein the fastener includes a head; a shaft; and a sleeve, wherein the shaft extends from a lower surface of the head, wherein a first portion of the shaft includes a helical thread, wherein the sleeve surrounds a second portion of the shaft, and wherein the sleeve is made of an elastomeric material having a shore durometer hardness in the range of 10 to 30.

In one exemplary embodiment, a method of securing a wall panel to a framing member using a fastener is disclosed. The method comprises using a tool to form a tapered hole in the wall panel, and inserting the fastener through the hole such that the fastener engages the framing member to fix the wall panel to the framing member, wherein the fastener includes a head; a shaft; and a sleeve, wherein the shaft extends from a lower surface of the head, wherein a first portion of the shaft includes a helical thread, wherein the sleeve surrounds a second portion of the shaft, and wherein the sleeve is made of an elastomeric material having a shore durometer hardness in the range of 10 to 30.

In some exemplary embodiments, the tool is a tapered end mill.

In some exemplary embodiments, the tool is a dual-bladed or fluted drill that corresponds to the shape of the sleeve, wherein the tool can have a smooth top section for tapering the top of the hole.

In some exemplary embodiments, the tool is a core bit that can be driven by a power drill.

In some exemplary embodiments, the tool is made of a tempered metal.

In some exemplary embodiments, the tool has an interior passage for conveying removed material through the tool and out one or more openings formed therein.

In some exemplary embodiments, a lower portion of the tool has a shape that corresponds to a fastener with an elastomeric sleeve.

Other aspects and features of the general inventive concepts will become more readily apparent to those of ordinary skill in the art upon review of the following description of various exemplary embodiments in conjunction with the accompanying figures.

BRIEF DESCRIPTION OF THE DRAWINGS

The general inventive concepts, as well as embodiments and advantages thereof, are described below in greater detail, by way of example, with reference to the drawings in which:

Figure 1 is a partial view of a conventional wall installation; wherein resilient channels are used to decouple the drywall from the studs.

Figures 2A-2C illustrate a typical residential wall construction. FIG. 2A is a partial view of the residential wall. FIG. 2B is an enlarged cross-sectional view of detail Z from FIG. 2A showing the screw-drywall-stud interface. FIG. 2C is a cross-sectional view of the screw-drywall-stud interface showing the effects of bending waves in the drywall material on the screw and the stud.

Figure 3 is a graph showing the transmission loss for a conventional wall with two layers of drywall.

Figure 4 is a graph showing a transmission loss for an exemplary conventional wall in view of the reference curve provided in the ASTM E413 standard.

Figure 5 is a graph showing a transmission loss for an exemplary conventional wall including a resilient channel system.

Figures 6A-6C are diagrams illustrating various resilient channel installations. FIG. 6A is a diagram illustrating a proper resilient channel installation. FIG. 6B is a diagram illustrating a less effective resilient channel installation. FIG. 6C is a diagram illustrating an inoperative resilient channel installation.

Figure 7 illustrates a conventional pocket-hole screw.

Figure 8 illustrates a modified pocket-hole screw, according to an exemplary embodiment.

Figure 9A illustrates an elastomeric sleeve, according to an exemplary embodiment, for use with the modified screw of FIG. 8.

Figure 9B illustrates an elastomeric sleeve, according to another exemplary embodiment, for use with the modified screw of FIG. 8.

Figure 10 is a diagram of a testing system for measuring the load supported by a drywall fastener.

Figure 11 is a graph showing the results of load testing, performed using the testing system of FIG. 10, on various drywall fastener configurations.

Figure 12 is a diagram of a testing system for measuring the frequency response function of a drywall fastener.

Figure 13 is a graph comparing the results of frequency response testing, performed using the testing system of FIG. 12, on a conventional drywall screw and a conventional resilient channel system.

Figure 14 is a graph comparing the results of frequency response testing, performed using the testing system of FIG. 12, on four modified screw assemblies.

Figure 15 is a graph comparing the results of frequency response testing, performed using the testing system of FIG. 12, on a conventional drywall screw, a conventional resilient channel system, and a modified screw assembly.

Figure 16 illustrates a testing system for simulating the design of the ASTM E90 standard by simulating the excitation by sound using vibration.

Figure 17 is a diagram illustrating components of a test specimen for use in the testing system of FIG. 16.

Figure 18 is a graph comparing the results of the testing, performed using the testing system of FIGS. 16-17, on a conventional drywall screw, a conventional resilient channel system, and various modified screw assemblies having a draft angle of five degrees.

Figure 19 is a graph plotting the transfer function for various acoustic washers (having different durometers) with a ten-degree draft angle.

Figure 20 is a graph plotting the transfer function for various acoustic washers (having different durometers) with a fifteen-degree draft angle.

Figure 21 is a graph plotting the transfer function for various acoustic washers (having different durometers) with a twenty-degree draft angle.

Figure 22 is a graph comparing the results of vibroacoustic energy transfer at 125 Hz one-third octave band for a standard wall, a wall having a resilient channel on one side, and a wall isolated with various modified screw assemblies.

Figure 23 is a graph comparing the results of vibroacoustic energy transfer at 2,000 Hz one-third octave band for a standard wall, a wall having a resilient channel on one side, and a wall isolated with various modified screw assemblies.

Figure 24 is a graph comparing the results of vibroacoustic energy transfer at 2,500 Hz one-third octave band for a standard wall, a wall having a resilient channel on one side, and a wall isolated with various modified screw assemblies.

Figure 25 illustrates a typical testing system for measuring apparent sound transmission loss through walls of an actual home.

Figure 26 is a graph comparing the baseline apparent sound transmission loss (per the ASTM E336 and E413 standards) for an interior wall, the measured apparent sound transmission loss for the interior wall, and a prediction of the RC-1 resilient channel performance for the interior wall.

Figure 27 is a graph comparing the baseline outdoor-indoor sound transmission loss (per the ASTM E336 and E1332 standards) for an exterior wall, the measured apparent sound transmission loss for the exterior wall, and a prediction of the RC-1 resilient channel performance for the exterior wall.

Figure 28 is a graph comparing the sound transmission loss (per the ASTM E90 and E413 standards) for an empty cavity wood stud wall installation, an insulated cavity resilient channel wood stud wall installation, and an insulated cavity acoustic washer wood stud wall installation.

Figure 29 is a graph comparing the sound transmission loss (per the ASTM E90 and E413 standards) for an empty cavity metal stud wall installation, an insulated cavity resilient channel metal stud wall installation, and an insulated cavity acoustic washer metal stud wall installation.

Figure 30 is a graph comparing the sound transmission loss (per the ASTM E90 and E413 standards) for another empty cavity metal stud wall installation, another insulated cavity resilient channel metal stud wall installation, and another insulated cavity acoustic washer metal stud wall installation.

Figure 31 is a graph comparing the sound transmission loss (per the ASTM E90 and E413 standards) for another empty cavity metal stud wall installation, another insulated cavity resilient channel metal stud wall installation, and another insulated cavity acoustic washer metal stud wall installation.

Figure 32 is a graph comparing the sound transmission loss (per the ASTM E336 and E413 standards) for an interior wall of a ranch-style home, including measurements for the empty wall, the wall including a resilient channel installation, and the wall including an acoustic washer installation.

Figure 33 is a graph comparing the sound transmission loss (per the ASTM E336 and E413 standards) for another interior wall of a ranch-style home, including measurements for the empty wall, the wall including a resilient channel installation, and the wall including an acoustic washer installation.

Figure 34 illustrates a tool, according to an exemplary embodiment, for forming a hole in drywall to receive a modified screw assembly.

Figures 35A-35C illustrate a tool, according to another exemplary embodiment, for forming a hole in drywall to receive a modified screw assembly.

Figure 36 illustrates a tool, according to another exemplary embodiment, for forming a hole in drywall to receive a modified screw assembly.

DETAILED DESCRIPTION

Unless defined otherwise, all technical and scientific terms used herein have the same meanings as commonly understood by one of ordinary skill in the art to which this invention belongs. Although any methods and materials similar or equivalent to those described herein can be used in the practice or testing of the present invention, the preferred methods, devices, and materials are now described. All references, publications, patent, patent applications, and commercial materials mentioned herein are described for all purposes including for describing and disclosing the methodologies which are reported in the publications which might be used in connection with the invention. Nothing herein is to be construed as an admission that the invention is not entitled to antedate such disclosure by virtue of prior invention.

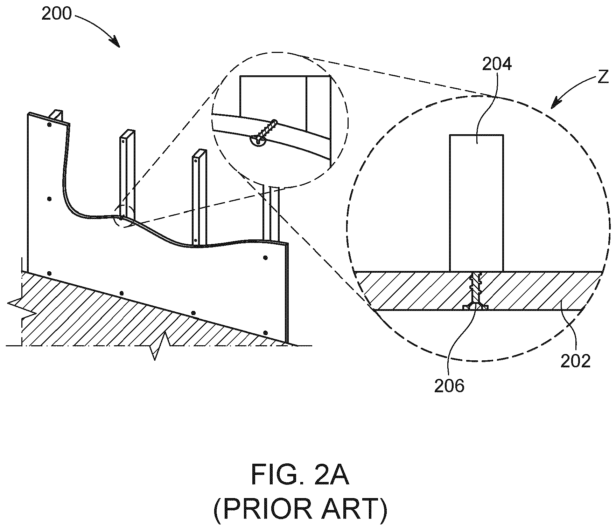

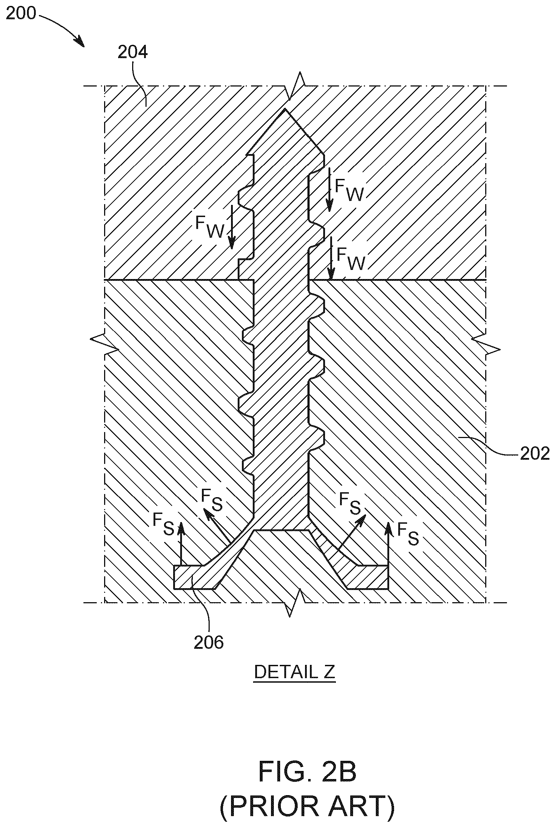

The construction of a portion of a typical residential wall 200 is shown in FIGS. 2A-2C. In the wall 200, drywall 202 is attached to wood studs 204 using drywall screws 206 (see FIG. 2A). The surface of the screw 206 under the head provides a clamping force holding the drywall 202 onto the stud 204. FIG. 2B shows the balancing forces of the screw threads pulling on the wooden stud 204 (Fw) and the screw head compressing the drywall 202 (Fs), which together provide the clamping forces holding the drywall 202 to the stud 204.

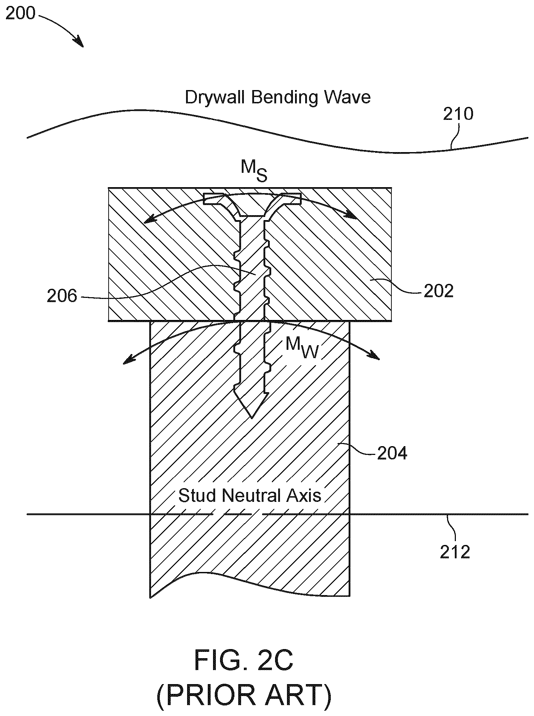

Sound is transmitted when bending waves 210 in the drywall material 202 are excited by the acoustic pressure waves in a building space adjacent to the wall 200. The bending waves 210 create a moment on the screws 206 attaching the drywall 202 to the studs 204. The bending waves 210, as shown in FIG. 2C, create a bending moment on the shaft of the screw 206 (Ms). That moment is transferred into the stud 204 as a bending moment (Mw) that creates a torsional movement of the stud 204 about its neutral axis 212. An opposite movement is created on the other side of the stud 204 and the bending moment in the stud 204 is transferred into the adjacent drywall and reradiated into the acoustic space.

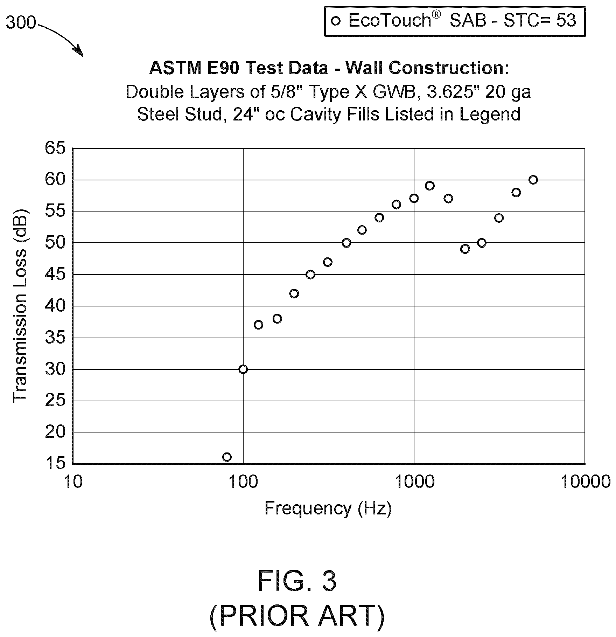

The transmission of energy is not without losses. For example, variances in the stud, screw torque, stud/drywall interface, etc. create energy losses that result in what is called a sound transmission loss. The laboratory measurement of this transmission loss is conducted per the ASTM Standard Test Method for Laboratory Measurement of Airborne Sound Transmission Loss of Building Partitions and Elements: ASTM E90. A plot 300 of the transmission loss for a commercial wall with two layers of drywall is shown in FIG. 3. The larger the transmission loss, the more energy that is removed from the vibro-acoustic wave as it travels through the wall. The sound levels in the adjacent space will conversely go down as the frequency of the sound goes up.

The data in FIG. 3 shows a dip in transmission loss between the 2,000 Hz and 2,500 Hz one-third-octave bands. This dip is most often referred to as the coincidence dip. It occurs at the frequency where the impedance of the wall system matches that of air. It is related to the elastic modulus and moment of inertia of the drywall. The stiffer and/or thicker the drywall, the lower frequency that this dip will occur.

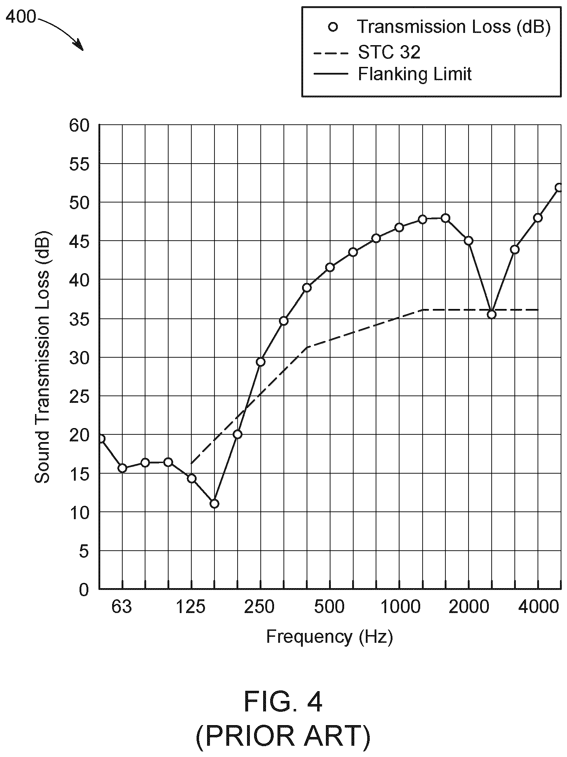

Architects, specifiers, and contractors prefer a single number rating scheme to describe the acoustic performance of a wall system. A preferred rating system used in the construction industry is the ASTM Standard for Classification for Rating Sound Insulation: ASTM E413. This standard describes a reference curve that is compared to the test data. Whenever the total of the data points below the reference curve equals 32 or the value of one point is 8 dB below the transmission loss test data at any one-third-octave band, the reference curve value at 500 Hz is recorded as the Sound Transmission Class (STC) rating. A graph 400 showing an example of transmission loss data for a wall system with the reference curve is shown in FIG. 4. Although the wall system has a coincidence dip near 2,500 Hz, the limiting transmission loss occurs at 160 Hz where the value for the wall system is 8 dB below the reference curve which results in an STC rating of 32.

The implication of the limit for the STC rating shown in FIG. 4 is that the low frequencies drive the rating. For each dB that the 160 Hz one-third octave center band sound transmission loss increases, the STC rating would increase, until another frequency was 8 dB below the reference curve or the sum of differences below the reference curve was equal to 32 dB. Therefore, by improving the low frequency performance of the wall system, the STC rating of the wall system would improve significantly.

Conventional approaches to reducing the energy transmitted through a commercial/residential wall are cumbersome, expensive, and prone to installation error. As noted above, resilient channels are a common method of improving the low frequency transmission loss of a wall system. An illustrative installation of resilient channels is shown in FIG. 1, where the channels are located between the drywall and the studs, typically on the side of the wall with the highest sound source levels. The idea is to reduce the vibro-acoustic energy from the source entering the structure of the building through the studs where it can find flanking paths for the energy.

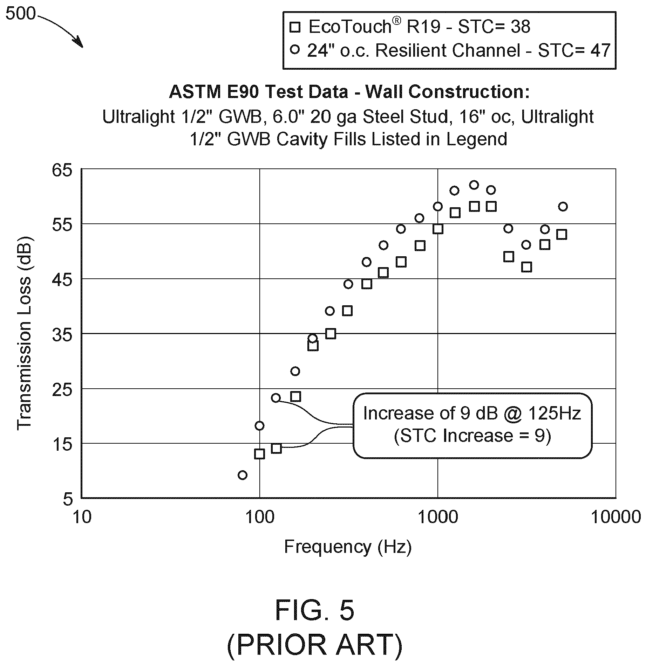

The performance of the resilient channel is dependent on the installation of the channel. A correctly installed resilient channel can enhance the sound transmission loss of a wall system significantly as shown in the graph 500 of FIG. 5, where the STC increases 9 dB. By isolating the drywall from the stud, the low frequency energy path is disrupted to a greater extent than the higher frequencies. This change in transmission loss is directly reflected in the STC change since the low frequencies were observed to be the limiting factor in STC performance of the tested wall.

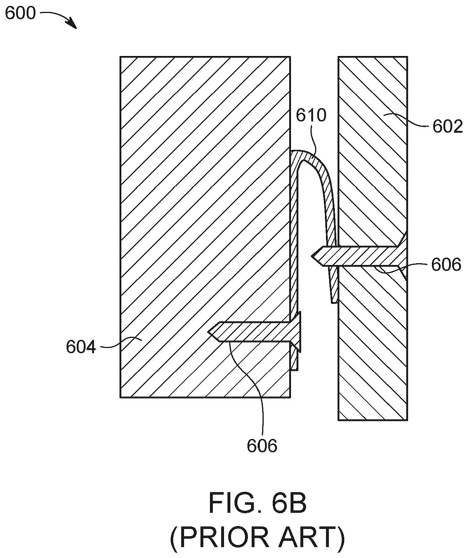

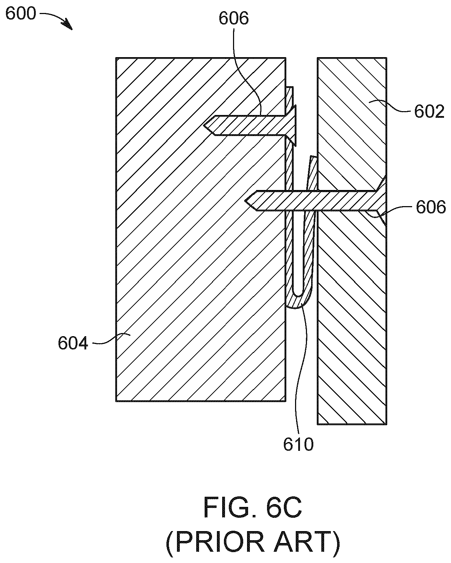

Although resilient channels 610 work when installed correctly as shown in FIG. 6A, there are issues that drive builders and other consumers to avoid using them. One such issue arises because the resilient channels 610 are installed across the studs 604 as shown in FIG. 1, which requires the contractor to accurately mark the drywall 602 to know where to put the screws 606 for installation of the channels 610. This takes time and introduces another opportunity for installation errors to occur. Another reason is that the installation is not intuitive. The resilient channel 610 must be installed with the open side facing up, as shown in FIG. 6A. Many inexperienced installers install it with the open end down, as shown in FIG. 6B. This provides some acoustic isolation, but not the expected isolation. Another installation issue is when the contractor uses a screw 606 that is too long and drives it into the stud 604, as shown in FIG. 6C. This type of installation prevents the drywall 602 from being isolated from the stud 604 and results in no significant change in STC for the wall assembly 600.

In view of these exemplary drawbacks of conventional acoustical insulation systems, the general inventive concepts encompass innovative fasteners and systems that use the fasteners to create an acoustically insulated room or space. When creating an acoustically insulated room (e.g., having a Sound Transmission Class (STC) rating of 50 or more), a primary factor in sound attenuation is the interaction (e.g., energy transfer path, vibro-acoustic coupling) between the fixed drywall, the wall studs, and the drywall screws. Thus, the general inventive concepts relate to an innovative attachment system that reimagines the stud/drywall/screw installation by presenting a new drywall fastener. As described herein, the inventive attachment system does not suffer from the drawbacks of conventional approaches, like the resilient channel system.

By focusing on the interaction between the drywall screw and the drywall panels being secured thereby, acoustical energy reaching the drywall/screw interface is attenuated to limit its transmission through the wall studs and into adjacent room(s). In the attachment system, no complex structures need to be inserted between the studs and the drywall. In general, the attachment system uses the drywall fastener to isolate the drywall from the stud and provide sound attenuation. In particular, one or more additional materials are added to the fastener (e.g., a conventional pocket-hole screw, a conventional lath screw, a conventional wafer-head screw). The added material mitigates the transference of various frequencies from the drywall to the studs, thereby improving the sound attenuation of the stud/drywall/screw assembly.

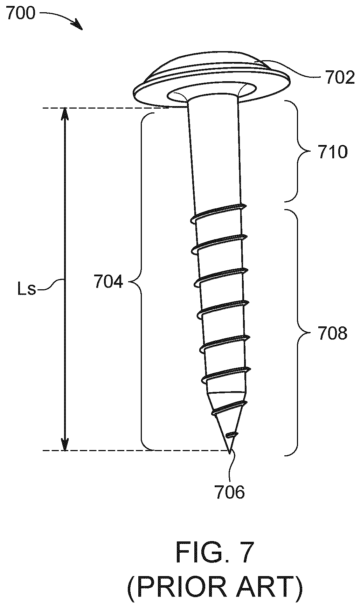

As shown in FIG. 7, a conventional pocket-hole screw 700 includes a head 702 and a shaft 704. The shaft 704 extends form the head 702 to a tip 706. While an upper surface of the head 702 can be rounded or flat, a lower surface of the head 702 is generally flat. The head 702 usually includes one or more indentations (not shown), such as slotted, Phillips, Torx®, hex, square, Japanese-standard, etc. indentations, that engage with a tool to facilitate turning of the screw 700. At least a portion of the shaft 704 (e.g., the portion intended to enter the stud) includes threads 708. In some instances, the entire shaft 704 includes threads 708. A non-threaded portion 710 of the shaft 704 is called the shank. A gauge of the screw 700 will often be in the range of #6 (3.5 mm) to #8 (4.2 mm). A length Ls of the shaft 704 varies and is often selected based on the thickness of the drywall.

Several illustrative embodiments will be described in detail with the understanding that the present disclosure merely exemplifies the general inventive concepts. Embodiments encompassing the general inventive concepts may take various forms and the general inventive concepts are not intended to be limited to the specific embodiments described herein.

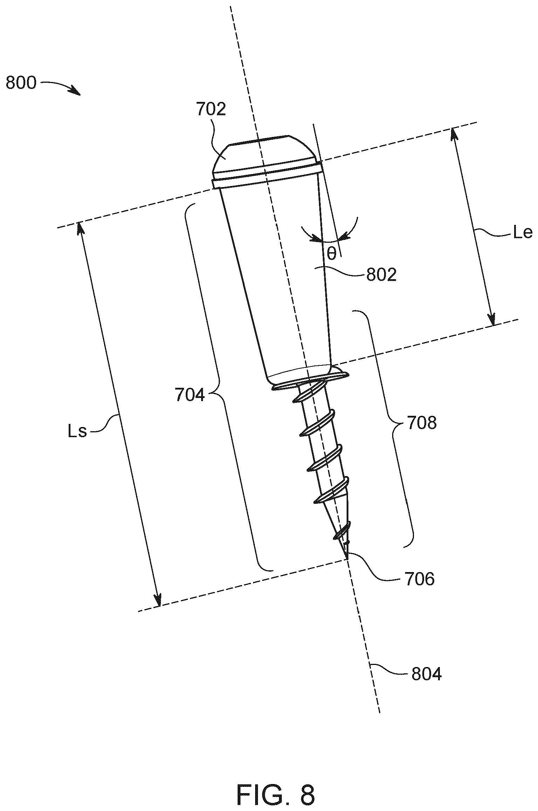

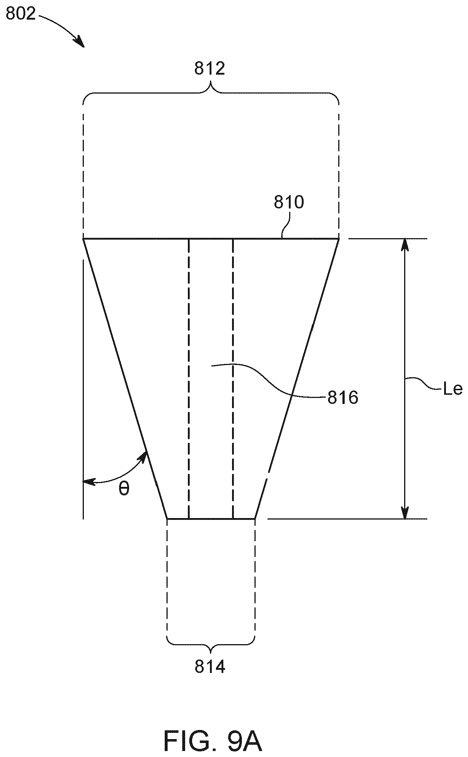

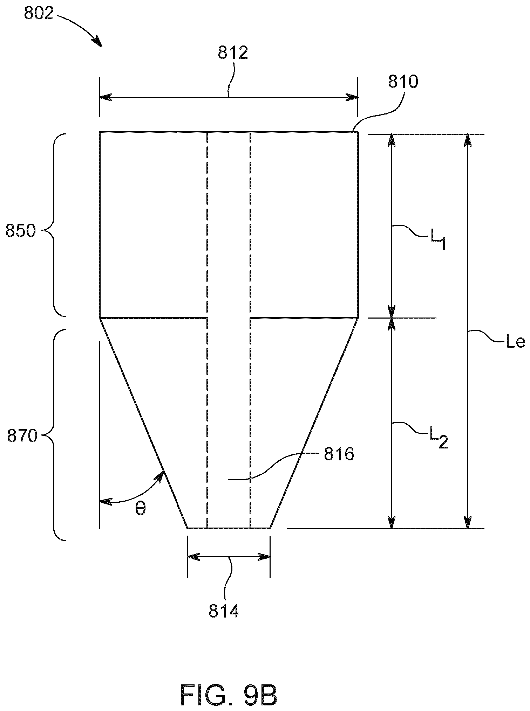

According to the general inventive concepts, a standard pocket-hole screw (e.g., the screw 700) is modified to include an elastomeric member (e.g., sleeve) on a portion thereof. The screw itself will typically be made of metal. A modified screw 800, according to one exemplary embodiment, is shown in FIG. 8. The screw 800 includes an elastomeric sleeve 802 that surrounds a portion of the shaft 704 between the head 702 and the tip 706. A diagram of the sleeve 802 separate from the screw is shown in FIG. 9A. A diagram of another embodiment of the sleeve (separate from the screw) is shown in FIG. 9B. In some exemplary embodiments, the sleeve 802 is molded onto the shaft 704. In some exemplary embodiments, the sleeve 802 is friction fit or screwed onto the shaft 704. In some exemplary embodiments, an adhesive is used to fix the sleeve 802 to the shaft 704.

In some exemplary embodiments, an end 810 of the sleeve 802 abuts an under-portion of the head 702. In some exemplary embodiments, a lower surface of the head 702 is flat. Having the lower surface of the head 702 be flat was found to mitigate against damage to the sleeve 802 during tightening of the fastener 800. In some exemplary embodiments, the length Ls of the shaft is in the range of 1/2 inches (12.7 mm) to 1 5/8 inches (41.28 mm).

In some exemplary embodiments, a length Le of the sleeve 802 is about the same as a thickness of the drywall to be supported by the screw 800.

In some exemplary embodiments, the length Le of the sleeve 802 is less than Ls/2. In some exemplary embodiments, the length Le of the sleeve 802 equals Ls/2. In some exemplary embodiments, the length Le of the sleeve 802 is greater than Ls/2. In some exemplary embodiments, the length Le of the sleeve 802 is less than a length of the shank 710. In some exemplary embodiments, the length Le of the sleeve 802 is equal to the length of the shank 710. In some exemplary embodiments, the length Le of the sleeve 802 is greater than the length of the shank 710.

The sleeve 802 is a hollow elastomeric body having a generally conical (i.e., a conical frustum) shape, with an outer circumference that decreases along its length Le the further away from the head 702 it extends. In particular, as shown in FIG. 9A, the outer circumference extends from a maximum diameter 812 to a minimum diameter 814 of the sleeve 802. In some exemplary embodiments, a largest outer circumference of the sleeve 802 is about the same as a largest circumference of the head 702 of the screw 800. The sleeve 802 includes a central cavity 816 for receiving or otherwise fitting around the shaft 704. In some exemplary embodiments, a diameter of the cavity 816 is in the range of 0.1 inches (2.54 mm) to 0.5 inches (12.7 mm).

The decreasing circumference of the sleeve 802 forms a slope or draft angle $\theta$ relative a central axis 804 of the screw 800. In some exemplary embodiments, $\theta$ is in the range of 0.1 degrees to 30 degrees. In some exemplary embodiments, $\theta$ is in the range of 3 degrees to 20 degrees. In some exemplary embodiments, $\theta$ is in the range of 1 degrees to 10 degrees. In some exemplary embodiments, $\theta$ is about 5 degrees. In some exemplary embodiments, the maximum diameter 812 and the minimum diameter 814 of the sleeve 802 are selected to achieve the desired slope angle $\theta$.

In one alternative design of the sleeve 802, as shown in FIG. 9B, the sleeve 802 is a hollow elastomeric body having an upper cylindrical portion 850 and a lower conical (i.e., a conical frustum) portion 870. Typically, the portions 850 and 870 are formed together, such that the sleeve 802 is a unitary body. It was found that by removing the conical shape from the upper section of the sleeve 802, the hole diameter on the finished side of the drywall was reduced. This reduction in the hole size in the drywall is expected to aid in finishing of the drywall installation. For example, the reduction in hole size may reduce the time to mud the wall, requiring less material to fill in the hole which, in turn, would allow for faster drying of the mud without cracking or sinking. The reduction in hole diameter also improved the quality of the installed system.

The cylindrical portion 850 of the sleeve 802 has an outer circumference that does not change along its length $L_1$ as it extends from the head 702 toward the conical portion 870. Conversely, the conical portion 870 has an outer circumference that decreases along its length $L_2$ as it extends from and below the cylindrical portion 850 (i.e., the further away from the head 702 it extends). In particular, as shown in FIG. 9B, the outer circumference extends from a maximum diameter 812 to a minimum diameter 814 of the sleeve 802.

In some exemplary embodiments, a largest outer circumference of the sleeve 802 is about the same as or smaller than a largest circumference of the head 702 of the screw 800. In some exemplary embodiments, the maximum width/diameter 812 of the sleeve 802 is about 0.350 inches (8.89 mm). In some exemplary embodiments, the minimum width/diameter 814 of the sleeve 802 is about 0.250 inches (6.35 mm).

The sleeve 802 includes a central cavity 816 for receiving or otherwise fitting around the shaft 704. The central cavity 816 extends through (and is generally coaxial with) the upper cylindrical portion 850 and the lower conical portion 870. In some exemplary embodiments, a diameter of the cavity 816 is in the range of 0.1 inches (2.54 mm) to 0.5 inches (12.7 mm). In some exemplary embodiments, the diameter of the cavity 816 is about 0.125 inches (3.175 mm).

In some exemplary embodiments, a length Le of the sleeve 802 is about the same as a thickness of the drywall to be supported by the screw 800. Here, Le = Li + $L_2$. In some exemplary embodiments, Le is about 0.500 inches (12.7 mm).

In general, values for $L_1$ and $L_2$ can be defined by the total length Le of the sleeve 802, the maximum diameter 812 of the sleeve 802, and the draft angle $\theta$. Here, $L_1$ is the length of the cylindrical portion 850 of the sleeve 802. Thus, $L_1$ = Le - $L_2$. $L_2$ is the length of the conical portion 870 of the sleeve 802. As shown in the following equation, $L_2$ is also equal to the tangent of the slope or draft angle $\theta$ (relative to the central axis 804 of the screw 800 on which the sleeve 802 is installed) multiplied by half the difference between the maximum diameter 812 and the minimum diameter 814.

$$L_2 = \frac{(812 - 814)}{2} \tan \theta$$

In some exemplary embodiments, the length Le of the sleeve 802 is less than Ls/2. In some exemplary embodiments, the length Le of the sleeve 802 equals Ls/2. In some exemplary embodiments, the length Le of the sleeve 802 is greater than Ls/2. In some exemplary embodiments, the length Le of the sleeve 802 is less than a length of the shank 710. In some exemplary embodiments, the length Le of the sleeve 802 is equal to the length of the shank 710. In some exemplary embodiments, the length Le of the sleeve 802 is greater than the length of the shank 710.

In the lower conical portion 870, the decreasing circumference of the sleeve 802 forms a slope or draft angle $\theta$ relative a central axis 804 of the screw 800. In some exemplary embodiments, $\theta$ is in the range of 0.1 degrees to 30 degrees. In some exemplary embodiments, $\theta$ is in the range of 3 degrees to 20 degrees. In some exemplary embodiments, $\theta$ is in the range of 1 degrees to 10 degrees. In some exemplary embodiments, $\theta$ is about 10 degrees. In some exemplary embodiments, the maximum diameter 812 and the minimum diameter 814 of the sleeve 802 are selected to achieve the desired slope angle $\theta$.

The material used to form the sleeve is selected to provide acoustic isolation for a desired frequency or range of frequencies. As shown in FIG. 8, the sleeve will often abut an under-portion of the head of the screw. In some exemplary embodiments, a spacing element (e.g., washer) could be situated between the head of the screw and the larger end of the sleeve. In some exemplary embodiments, a hardness of the spacing element would be less than the hardness of the screw head. In some exemplary embodiments, a hardness of the spacing element would be greater than the hardness of the sleeve.

In some exemplary embodiments, the sleeve is made of rubber. In some exemplary embodiments, the sleeve is formed from a natural rubber material. In some exemplary embodiments, the sleeve is formed from a synthetic rubber material (e.g., silicone). In some exemplary embodiments, the rubber forming the sleeve has a (durometer) hardness in the range of 10 to 30. Typically, the portion of the screw lacking the sleeve is intended to enter the stud. Upon installation, the inventive screw is driven through a hole in the drywall and into the stud, whereby the sleeve compresses and fills the hole in the drywall. In the inventive system, the modified screw can structurally hold/support the drywall, while also mitigating the transfer of acoustic energy through the screws/drywall.

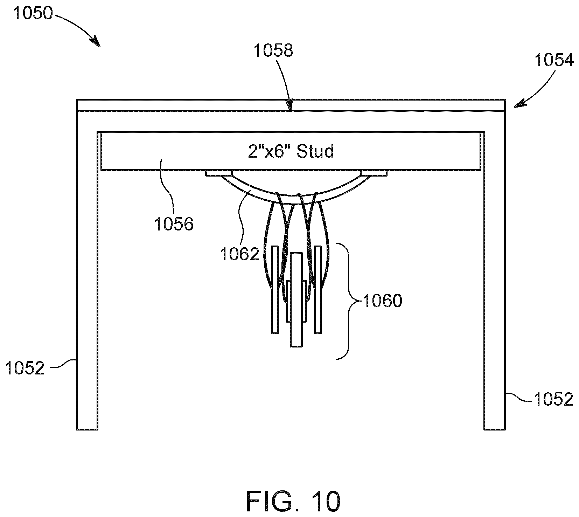

As a primary purpose of a drywall screw is to hold the drywall in place on walls and ceilings, the proposed fastener (e.g., the screw 800) was evaluated to determine whether it would provide the same level of "holding" performance as a standard (unmodified/bare) drywall screw. A first test fixture 1050 was constructed to measure the load supported by various drywall screw designs. A schematic of the test fixture 1050 used for load testing is show in FIG. 10.

The test fixture 1050 includes a frame 1052 that supports and is connected to an assembly of drywall 1054 and a stud 1056, which is held together by a screw 1058 to be evaluated. One or more weights 1060 are positioned to exert a force against the screw 1058. In particular, the weights 1060 are suspended from a handle 1062 secured to the stud 1056, such that the weights exert a measurable force on the stud 1056 to screw 1058 interface (through the drywall 1054). The overall weight hanging from the handle 1062 is increased until the screw 1058 fails and the assembly becomes separated from the frame 1052 or otherwise compromised. At this point, the failure weight is recorded.

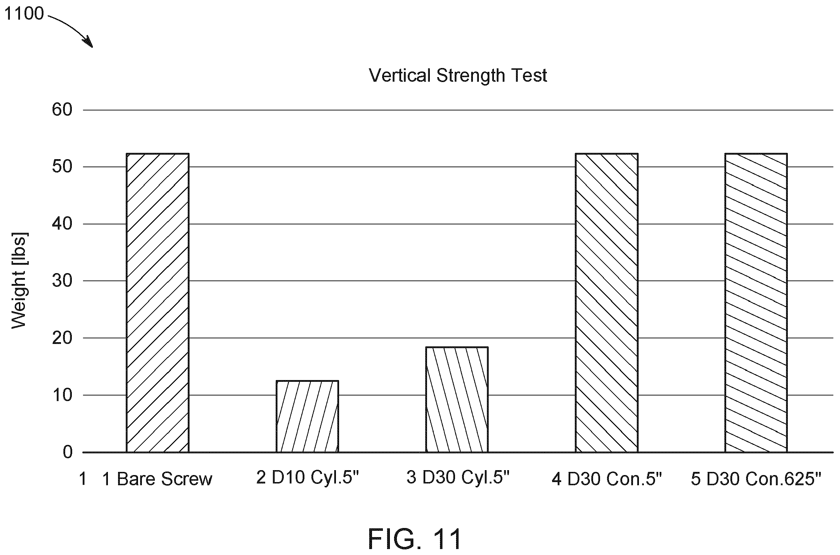

Testing of the holding strength (using fixture 1050) revealed that a cylindrical sleeve made of urethane would not support the drywall as well as the plain drywall screw. Testing of variations of this design with different sleeve hardness values (e.g., on the shore durometer scale) continued to result in poor performance. Consequently, a conical sleeve made of urethane was developed with the aim of increasing the force imparted to the drywall from the screw through the urethane elastomer. A slope angle of five degrees was chosen. The sleeves were molded around a drywall screw and evaluated. Each screw was the same type and length. Representative results of the load testing for (1) a bare drywall screw (no sleeve), (2) the screw modified to include a cylindrical urethane 10-durometer 5/8-inch sleeve, (3) the screw modified to include a cylindrical urethane 30-durometer 5/8-inch sleeve, (4) the screw modified to include a conical urethane 30-durometer 1/2-inch sleeve, and (5) a screw modified to include a conical urethane 30-durometer 5/8-inch sleeve are shown in the graph 1100 of FIG. 11.

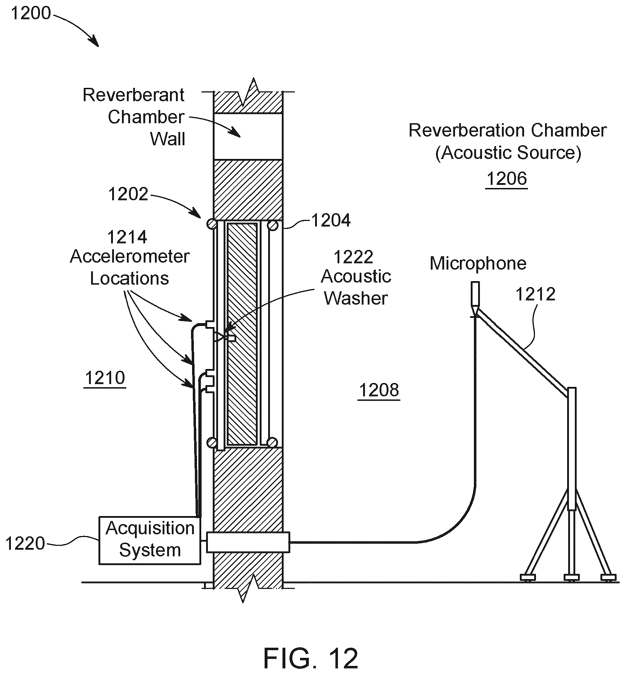

Having determined that the conical design of the elastomeric sleeve provides sufficient strength to support the drywall in a similar manner to the bare screw, additional testing was performed to determine the effective isolation provided by such a design. A test arrangement 1200 was used to measure the frequency response function (i.e., output acceleration divided by input acoustic pressure) to evaluate various designs and compare them to a conventional resilient channel. As shown in FIG. 12, the test system 1200 comprised a 4-foot by 4-foot test specimen 1202 formed from 2-inch by 4-inch framing members and 5/8-inch drywall. The specimen 1202 was sealed into an opening 1204 of a reverberation chamber 1206, the drywall being sealed on both the source side 1208 and receiving side 1210 with Nashua #2 duct seal to prevent sound from leaking around the perimeter of the specimen 1204. An acoustic source 1212 was used to excite one side (i.e., the source side 1208) of the specimen 1202. Accelerometers 1214 mounted to the exterior side 1210 of the specimen 1204 were used to measure the acceleration of the transmitted vibration. A Bruel & Kjaer pulse data acquisition system 1220 was used to acquire and analyze the data for each fastener 1222 (e.g., the screw 800) being evaluated, with the fastener 1222 securing the drywall to the framing member on the exterior side 1210 of the specimen 1202. The resulting frequency response or transmissibility was then determined. The frequency response function, or transmissibility, is the ratio of the output acceleration, determined by the accelerometer(s) 1214, and the input force from the acoustic source 1212. This measure represents the method of vibro-acoustic energy transmission in the actual use condition. A value of one means that the value measured is equal on both sides. Values lower than one are desirable, with lower values corresponding to better acoustic isolation.

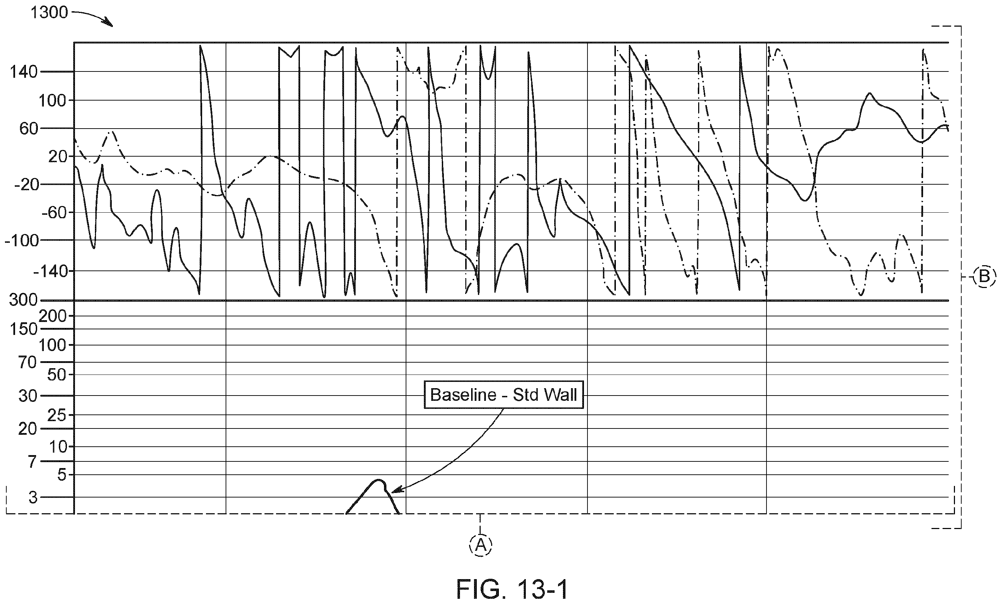

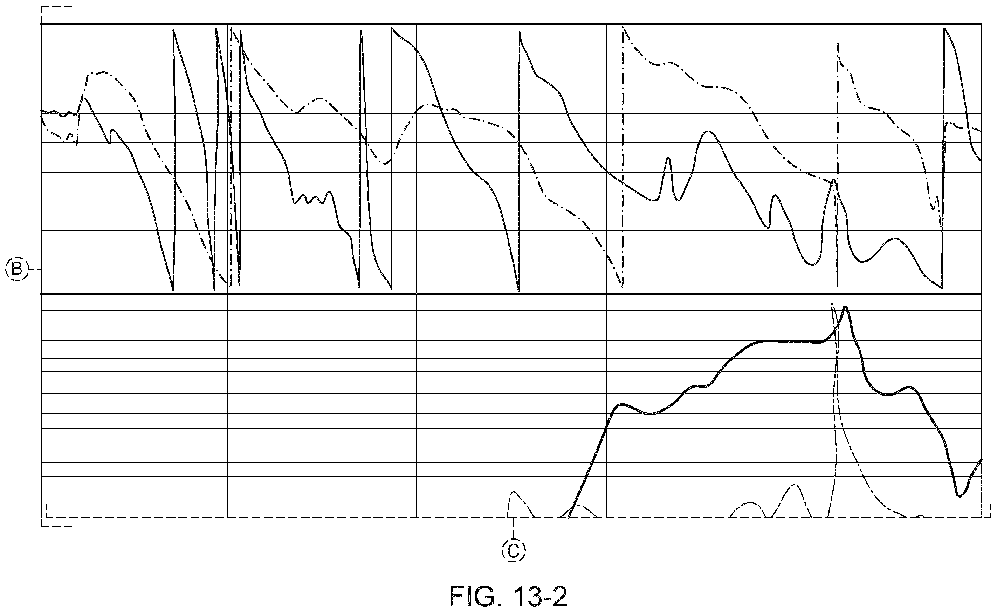

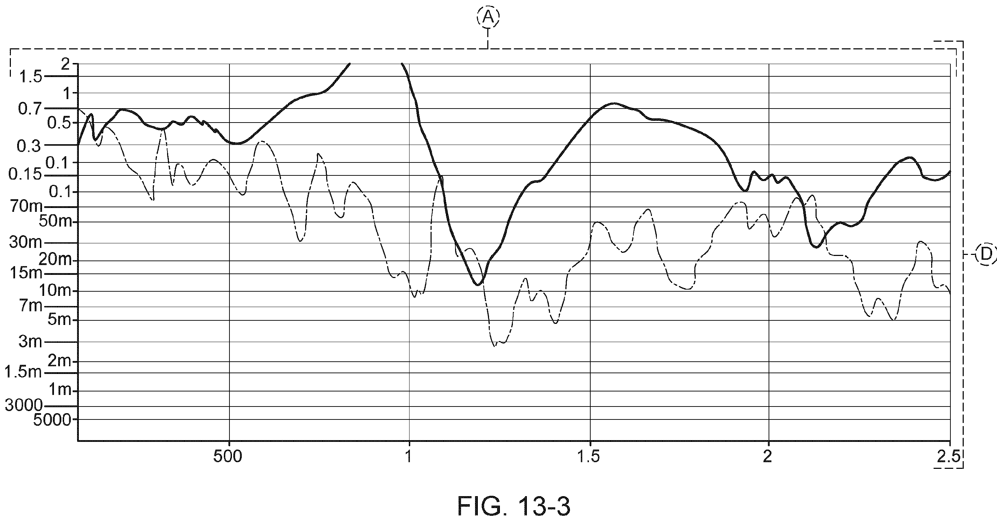

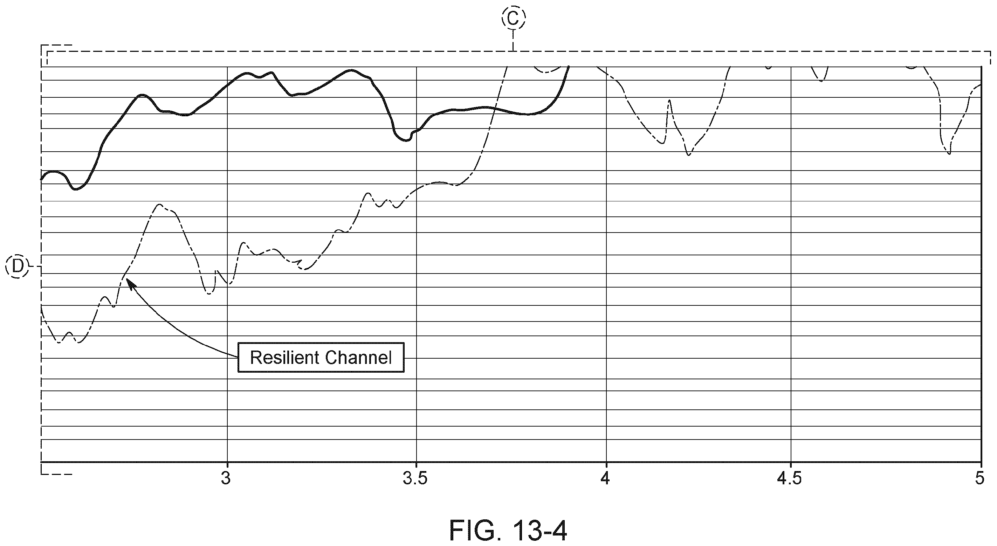

The test results comparing a conventional bare screw (i.e., lacking any elastomeric sleeve) to a conventional resilient channel are shown in the graph 1300 of FIG. 13. As expected, the resilient channel provided significantly less energy transmission when compared to the bare screw from one side of the wall to the other. This validated the ability of the test system 1200 to provide design direction for the invention.

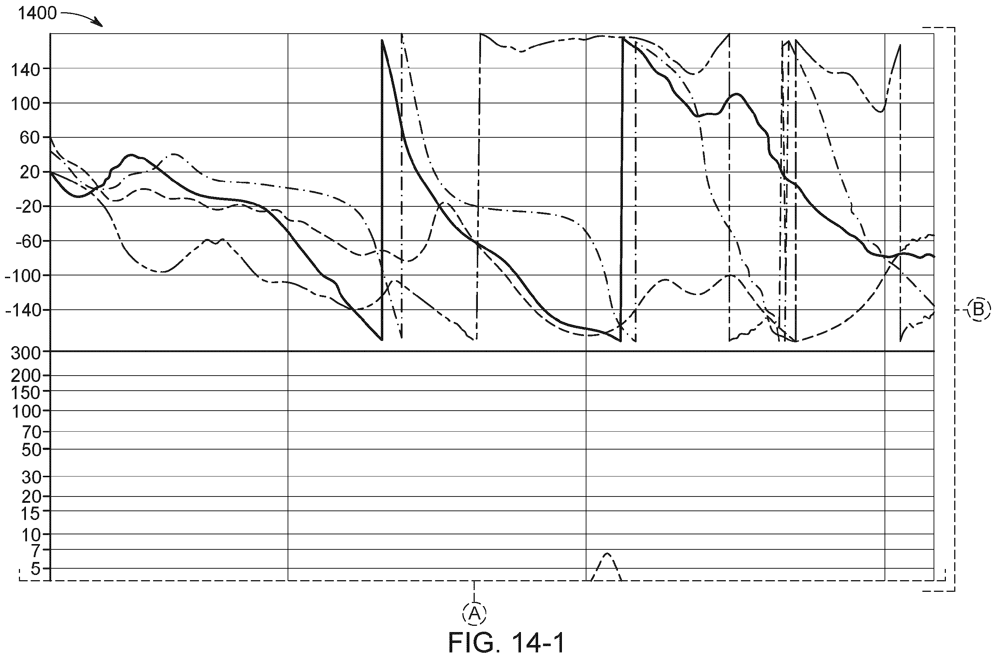

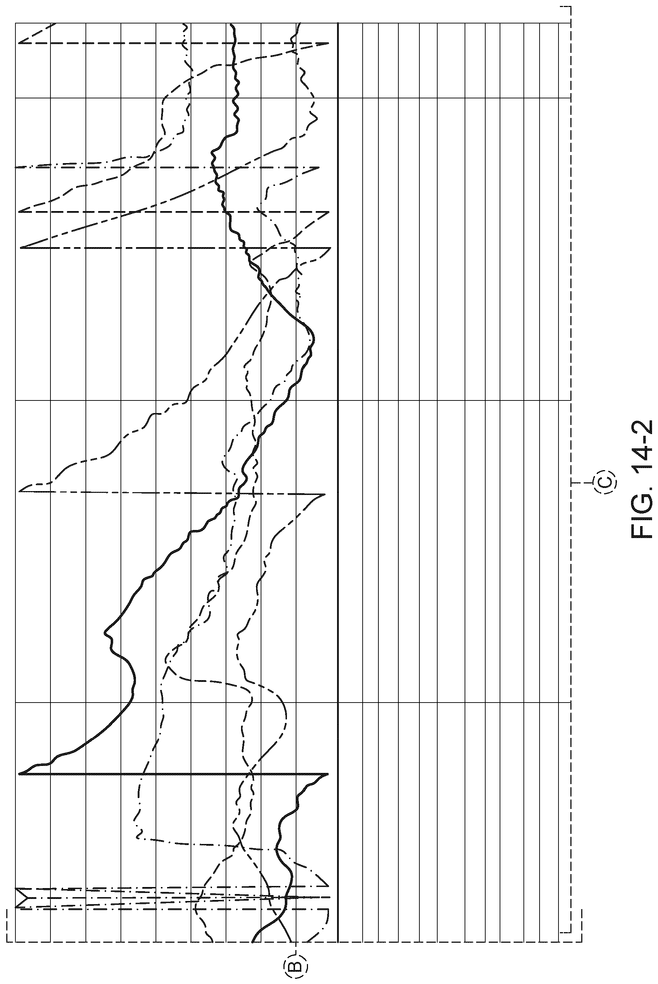

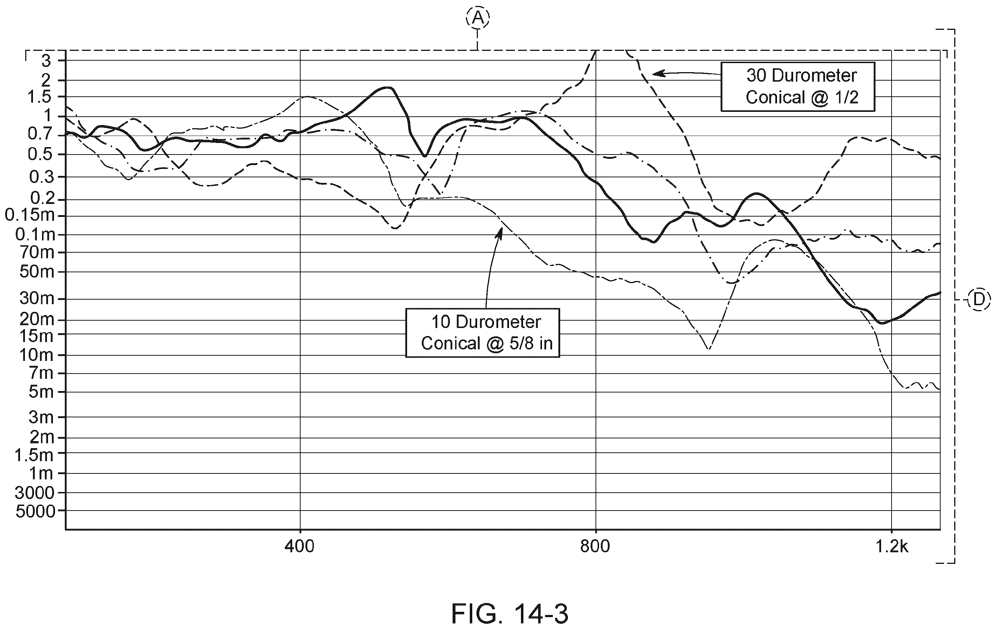

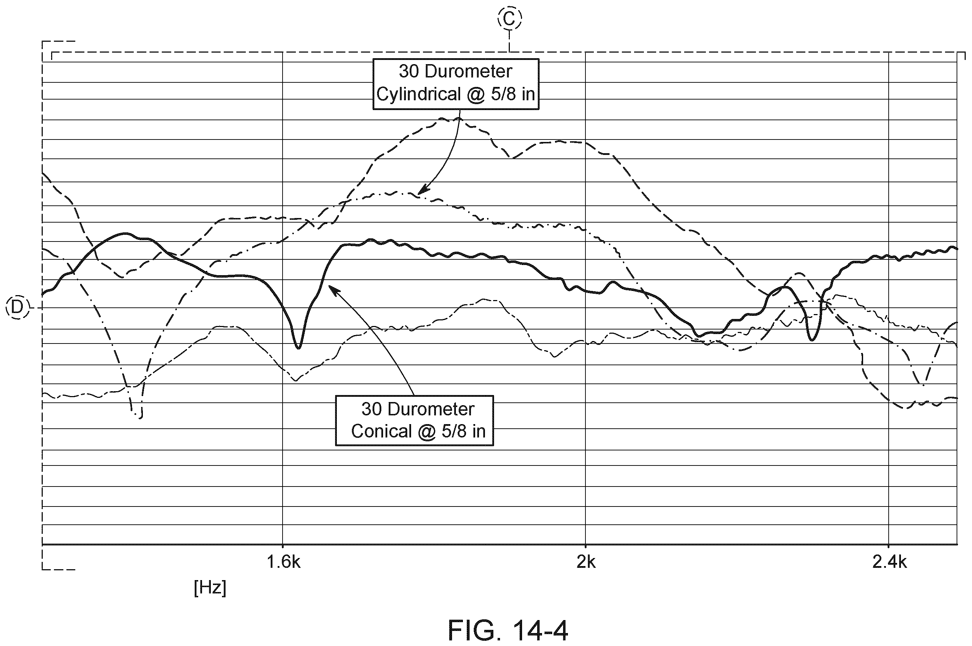

The test system 1200 was used to assess four modified screws (e.g., the screw 800), having molded urethane sleeves of differing shapes, hardness, and/or lengths, to determine the frequency response function, or transmissibility, in the test system 1200. The results of these tests are shown in the graph 1400 of FIG. 14.

It was discovered that the length of the conical urethane sleeve has a significant effect on the vibro-acoustic energy transmission. The 0.5 inches (12.7 mm) long piece did not provide as much isolation as the 0.625 inches (15.88 mm) long piece provided. Additionally, it was determined that the conical sleeve having a durometer hardness of 10 transmitted significantly less energy from one side of the wall to the other when compared to the conical sleeves having a durometer hardness of 30.

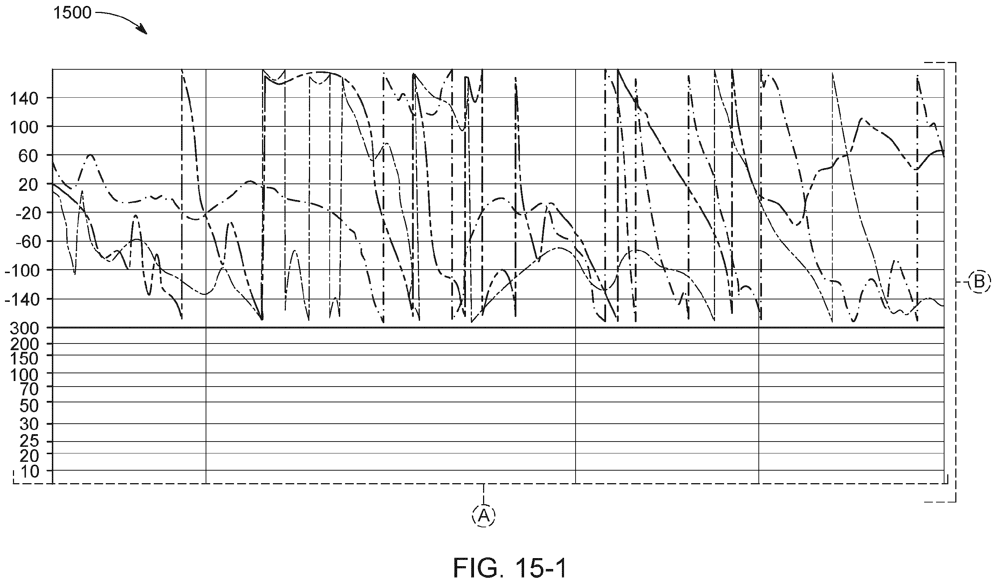

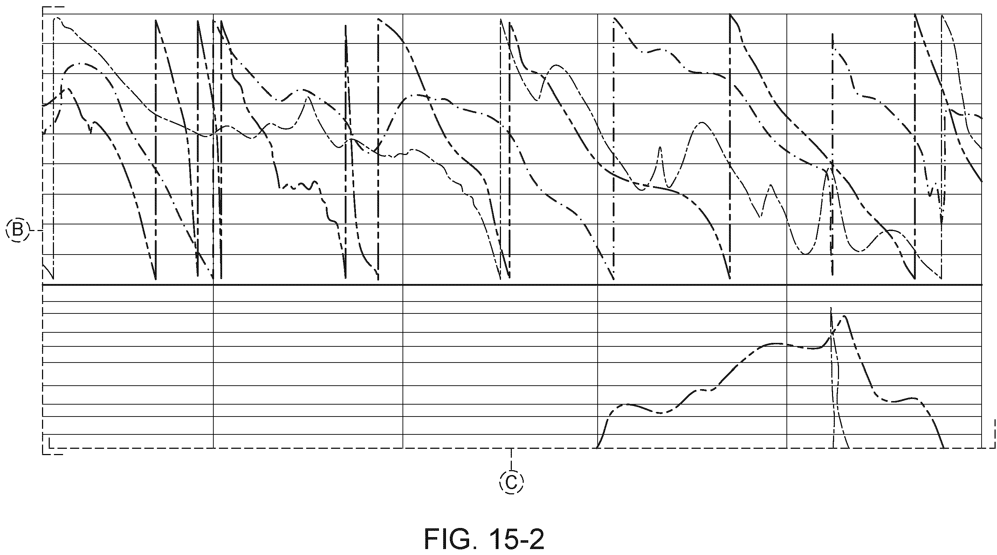

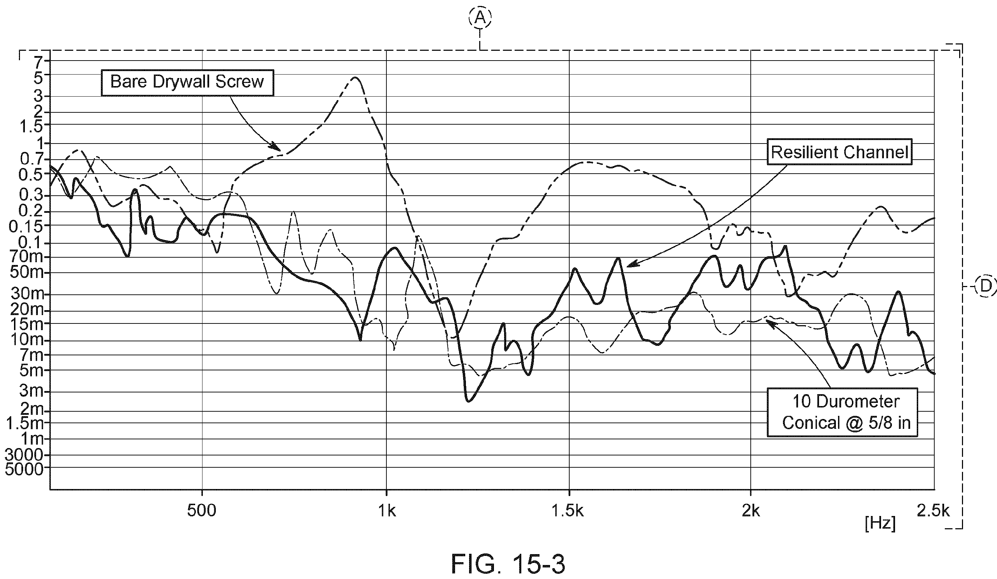

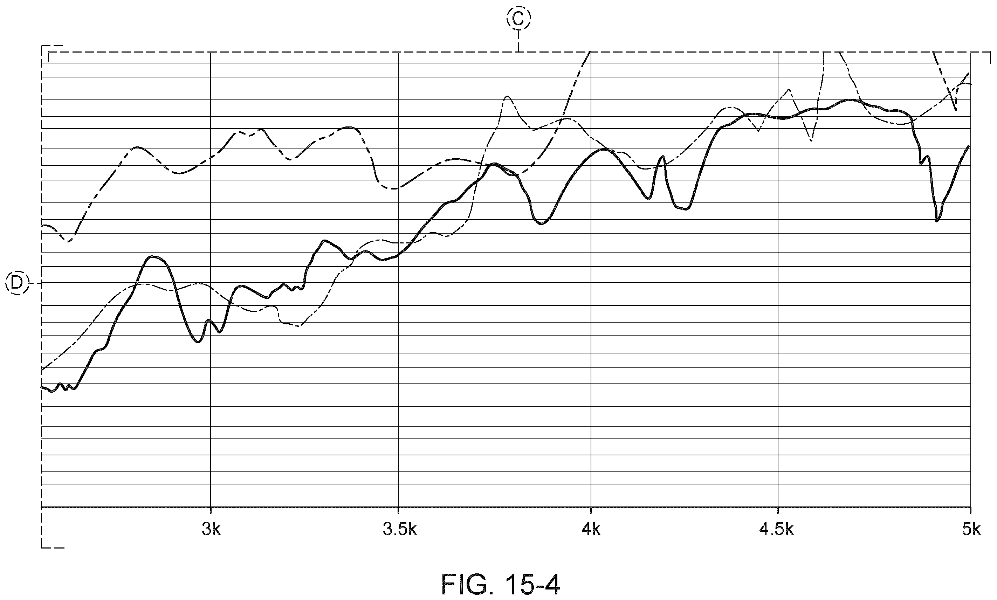

In the graph 1500 of FIG. 15, the test results for the conical sleeve having the durometer hardness of 10 were plotted against test results for the bare screw and the resilient channel. The screw including the inventive conical sleeve provided similar (low) energy transmission results from one side of the wall to the other, when compared to that of the conventional resilient channel. The screw including the inventive conical sleeve also provided much less energy transmission from one side of the wall to the other, when compared to the conventional bare screw.

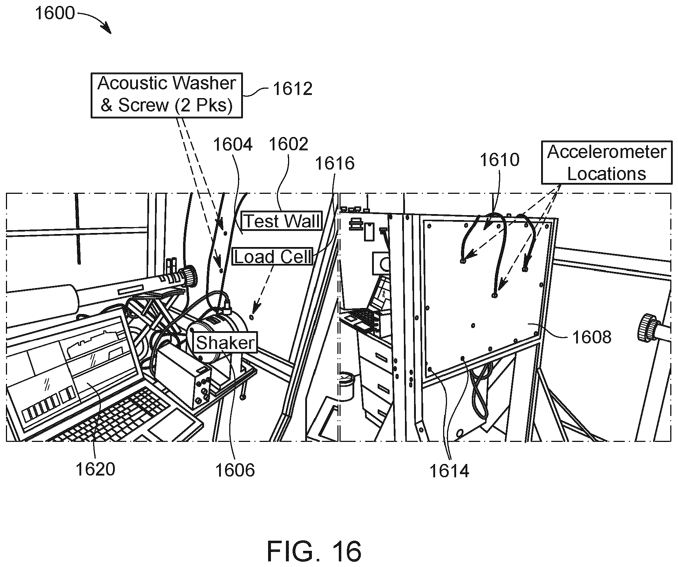

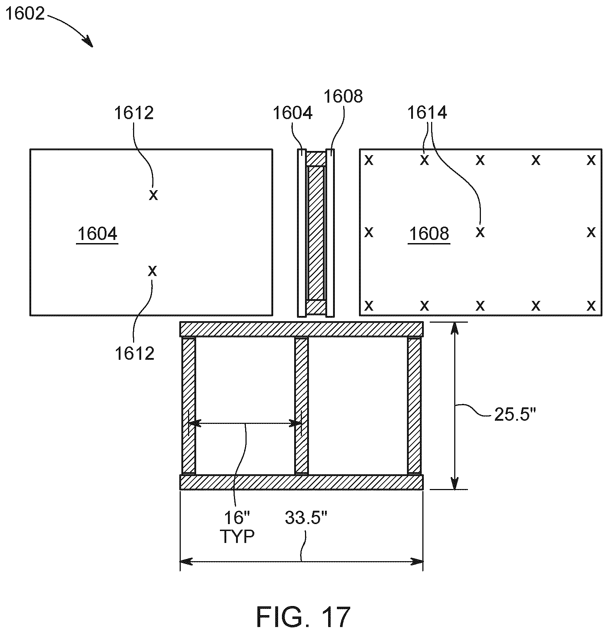

In a next phase of testing, sleeves formed of silicone were assessed. More specifically, these tests were aimed at determining the effects of the slope or draft angle $\theta$ and the hardness (e.g., on the durometer scale) of the silicone material on the energy transferred through the wall. A test fixture 1600 was created to simulate the design of the ASTM E90 test setup using vibration rather than sound as the excitation (see FIG. 16). A test specimen 1602 was constructed from an arrangement of 2x4 wooden members, with a single layer of 0.5 inches (12.7 mm) thick standard drywall on each side of the wooden frame, as shown in FIG. 17. More specifically, in the diagram of FIG. 17, an overall size of the test specimen 1602 is shown in the lower view, the location of the two inventive fasteners 1612 being assessed is shown in the upper left view, and the location of the standard drywall mounting screws 1614 is shown in the upper right view.

In the test fixture 1600, one side 1604 of the wall specimen 1602 is excited by an electrodynamic shaker 1606 and the acceleration (i.e., vibrations) transferred to the other side 1608 of the wall specimen 1602 is averaged across three accelerometers 1610. The electrodynamic shaker 1606 provided pink noise input to the isolated drywall 1604 through a load cell 1616, to measure the input force imparted to the drywall 1604. This force created transverse bending waves in the drywall 1604 that spread over the entire area of the drywall 1604 creating minute bending moments on the fasteners 1612 in all directions.

The fasteners 1612 absorbed the energy of the moments, dissipating them via shear forces within the material, reducing the bending moments applied to the screw portion of the fasteners 1612 and on into the stud of the specimen 1602. The average of the three accelerometers 1610 determined the vibration transmitted to the drywall 1608 on the opposite side of the specimen wall 1602. A data acquisition system 1620 divided the output acceleration by the input force to normalize the data for variation of the input amplitude. All tests, with the exception of that establishing the baseline standard wall, were run with Quietzone acoustic batts (sold by Owens Corning of Toledo, Ohio) installed in the cavities of the specimen wall 1602.

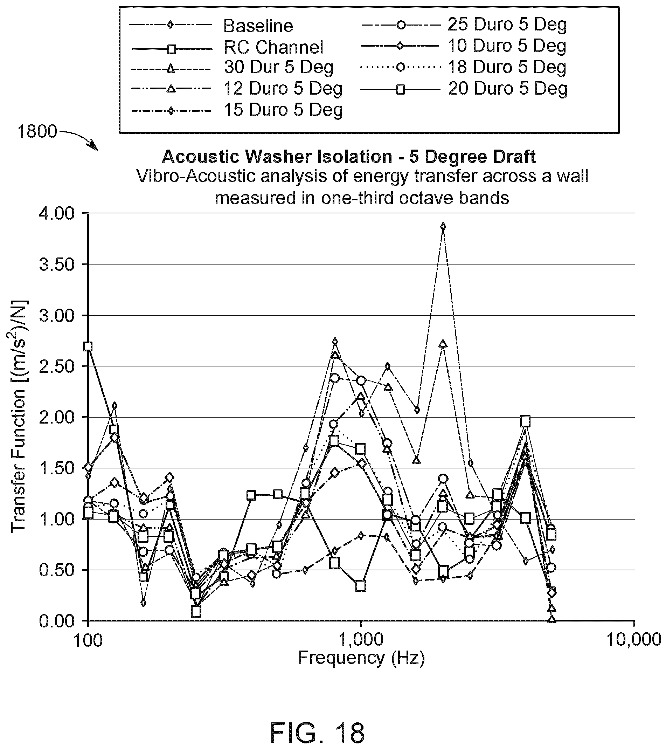

In this manner, the test fixture 1600 was used to assess various designs of molded silicone sleeves of differing shapes, hardness, and/or lengths, to determine the frequency response function, or transmissibility, in the test fixture 1600. The results for the tested screw and sleeve assemblies are shown in FIGS. 18-21. The data is presented in one-third-octave bands similar to the data presented for the acoustic measurements. The data for each of the slope/draft angles shows a similar pattern where the isolation values determined for the various hardness (durometer) values were bunched close together below 500 Hz implying that isolation provided was not as beneficial to the system at those frequencies. The separation in isolation becomes much clearer above 500 Hz. Analysis of the data shows that each material hardness (e.g., durometer value) appears to affect the isolation in differing ways. It also shows that the isolation result is dependent on both the slope/draft angle and the material hardness.

In the graph 1800 of FIG. 18, the data includes transfer functions that indicate the amount of isolation that is provided by the tested fasteners having a five-degree slope/draft angle for various hardness (durometer) values, as installed in a wall formed from 2x4 wooden studs with 0.5 inches (12.7 mm) thick standard drywall on each side thereof.

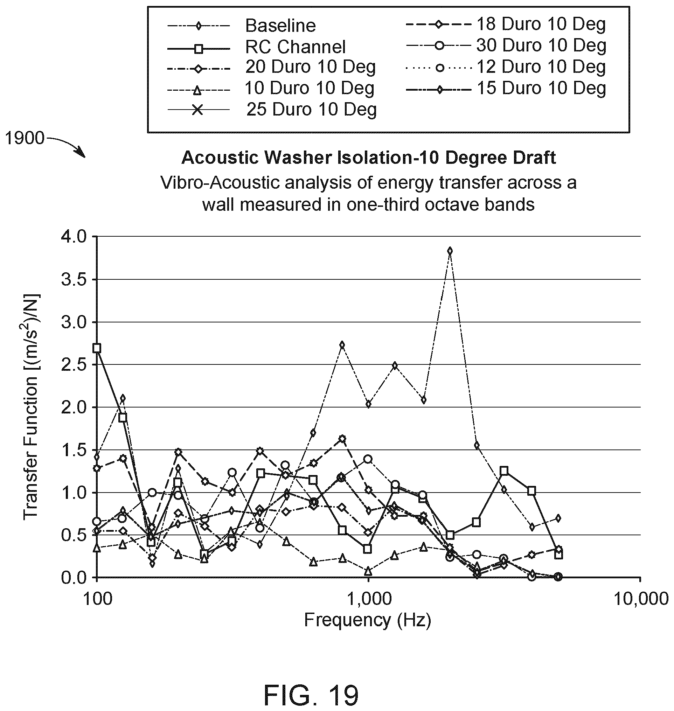

In the graph 1900 of FIG. 19, the data includes transfer functions that indicate the amount of isolation that is provided by the tested fasteners having a ten-degree slope/draft angle for various hardness (durometer) values, as installed in a wall formed from 2x4 wooden studs with 0.5 inches (12.7 mm) thick standard drywall on each side thereof.

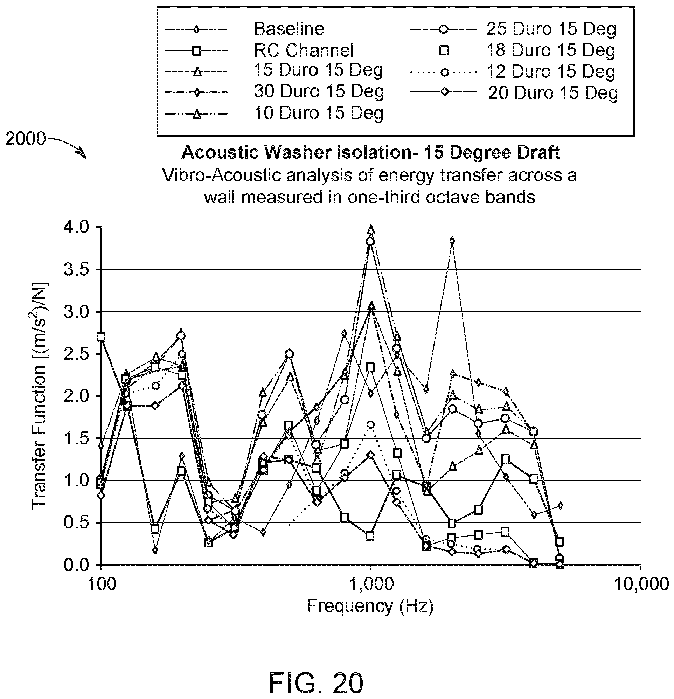

In the graph 2000 of FIG. 20, the data includes transfer functions that indicate the amount of isolation that is provided by the tested fasteners having a fifteen-degree slope/draft angle for various hardness (durometer) values, as installed in a wall formed from 2x4 wooden studs with 0.5 inches (12.7 mm) thick standard drywall on each side thereof.

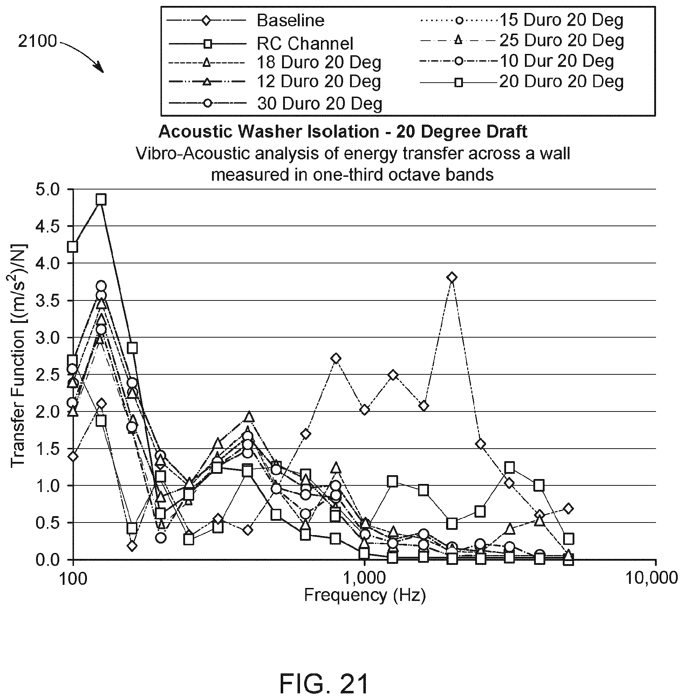

In the graph 2100 of FIG. 21, the data includes transfer functions that indicate the amount of isolation that is provided by the tested fasteners having a twenty-degree slope/draft angle for various hardness (durometer) values, as installed in a wall formed from 2x4 wooden studs with 0.5 inches (12.7 mm) thick standard drywall on each side thereof.

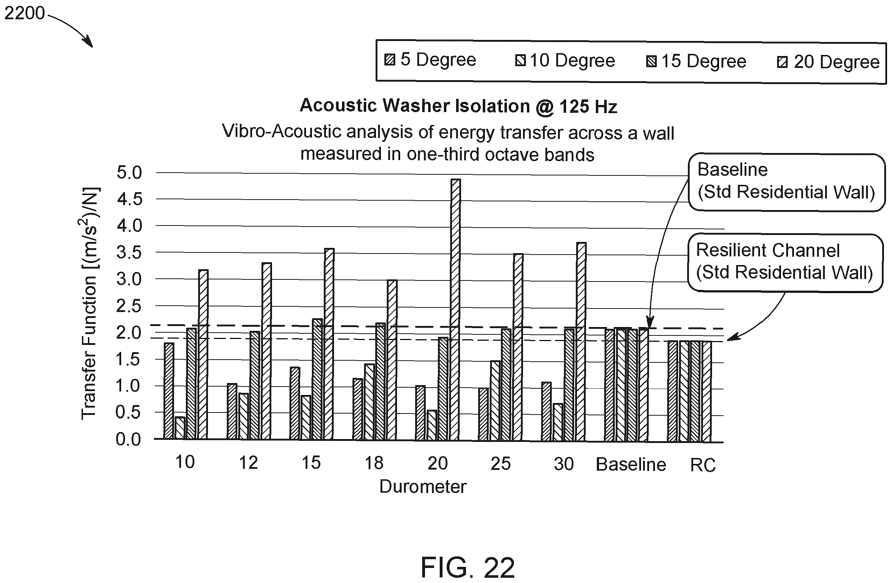

Analyzing the performance of standard walls versus the STC curve in the typical transmission loss test (see FIG. 4) shows that the STC numbers of residential walls are highly dependent on the transmission loss at the 125 Hz and 2,500 Hz one-third-octave bands, although the 2,000 Hz band can also affect the rating. Thus, this data was reduced, as shown in FIGS. 22-24, to illustrate the data at these critical frequencies for a standard residential wall (baseline), a wall with one side isolated with a conventional resilient channel system, and a wall isolated with the inventive fasteners (i.e., screw-sleeve assemblies) for seven different hardness (durometer) values and four different slope/draft angles. This data establishes several combinations of hardness values and slope/draft angles that perform as well as, or better than, the resilient channel system in reducing the energy transmitted through the wall.

In the graph 2200 of FIG. 22, the data includes transfer functions for the 125 Hz one-third-octave band that show the amount of isolation provided by the tested fasteners having various slope/draft angles and hardness (durometer) values, as installed in a 33.5 inch (850.9 mm) wide by 24 inch (609.6 mm) high wood stud wall, 16 inch (406.4 mm) on center, with a single layer of 0.5 inches (12.7 mm) thick standard drywall on each side thereof.

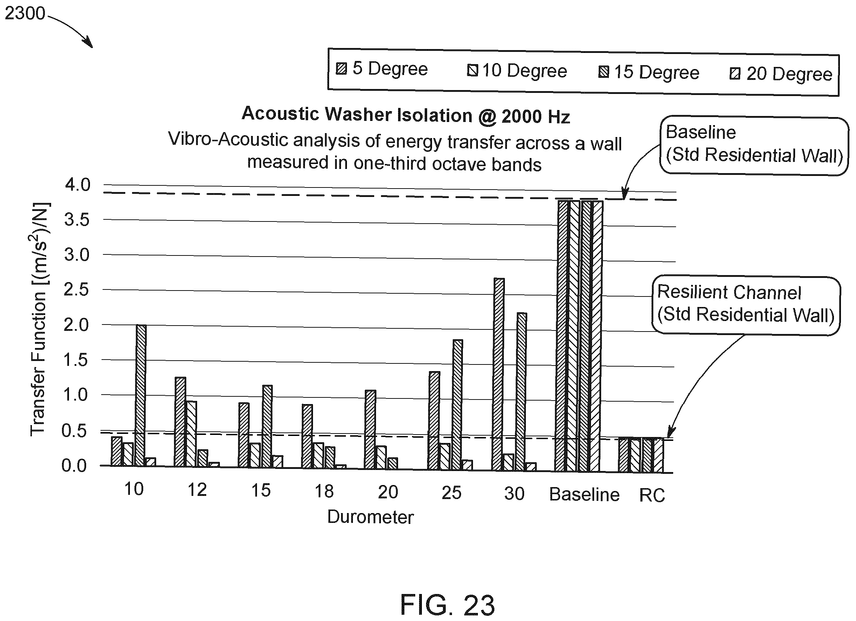

In the graph 2300 of FIG. 23, the data includes transfer functions for the 2,000 Hz one-third-octave band that show the amount of isolation provided by the tested fasteners having various slope/draft angles and hardness (durometer) values, as installed in a 33.5 inch (850.9 mm) wide by 24 inch (609.6 mm) high wood stud wall, 16 inch (406.4 mm) on center, with a single layer of 0.5 inches (12.7 mm) thick standard drywall on each side thereof.

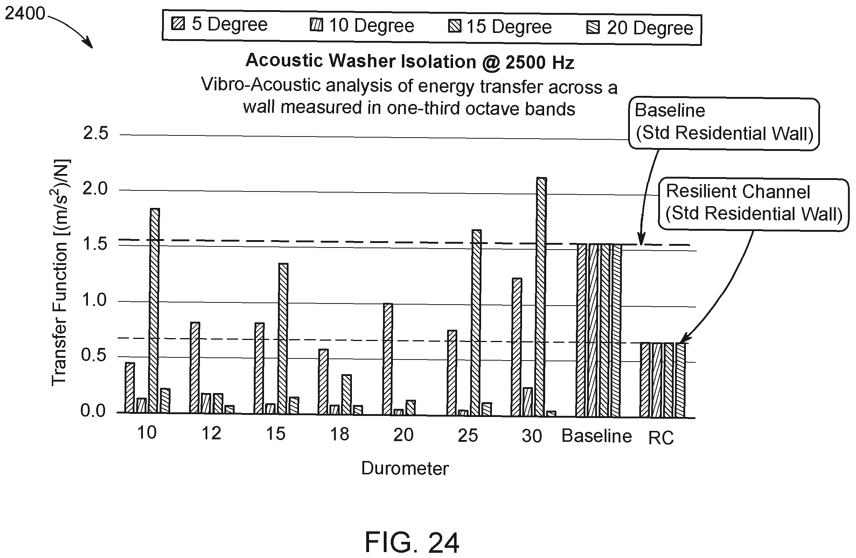

In the graph 2400 of FIG. 24, the data includes transfer functions for the 2,500 Hz one-third-octave band that show the amount of isolation provided by the tested fasteners having various slope/draft angles and hardness (durometer) values, as installed in a 33.5 inch (850.9 mm) wide by 24 inch (609.6 mm) high wood stud wall, 16 inch (406.4 mm) on center, with a single layer of 0.5 inches (12.7 mm) thick standard drywall on each side thereof.

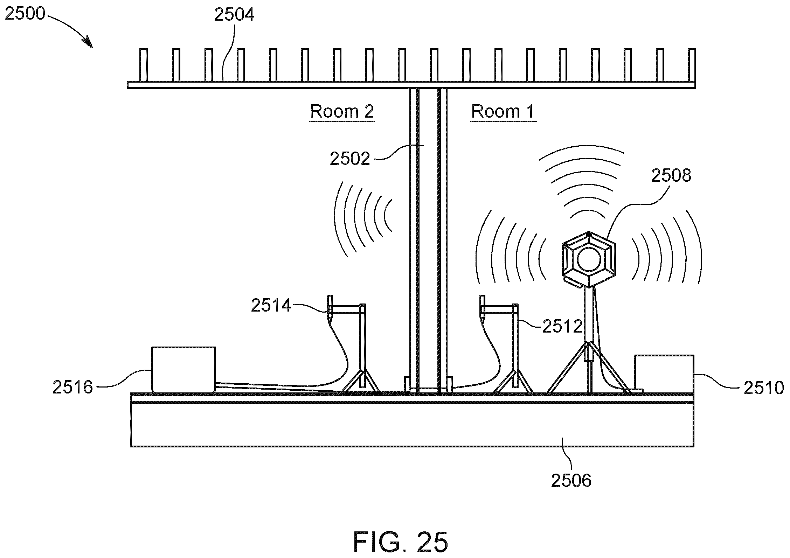

Field testing of the inventive fasteners was also performed in a residential home. In particular, an interior wall (i.e., room-to-room) installation and an exterior wall (i.e., room-to-outside) installation were assessed. A diagram of the testing arrangement 2500 used to measure sound transmission loss through an interior wall of the home is shown in FIG. 25. As shown in FIG. 25, the interior wall 2502 separates a first room, Room 1 (e.g., a bedroom) from a second room, Room 2 (e.g., a hallway). The interior wall 2502 extends between a ceiling 2504 and a floor 2506 common to Room 1 and Room 2. The fasteners being tested were installed on the Room 1-side of the wall 2502. A sound source in the form of a speaker 2508 is situated in Room 1 in proximity to the wall 2502. An amplifier 2510 or other sound generating device can be used to drive the speaker 2508. A first microphone 2512 is situated in Room 1, while a second microphone 2514 is situated in Room 2. In operation, the microphones 2512, 2514 are able to measure sound levels on each side of the wall 2502, such that an analysis system 2516 can process the sound levels to determine an apparent sound transmission loss through the wall 2502. A similar testing arrangement was used to measure sound transmission loss through the exterior wall of the home, with the speaker/amplifier being placed outside the home and in proximity to the exterior wall and with the fasteners being tested installed on the internal (i.e., conditioned) side of the exterior wall.

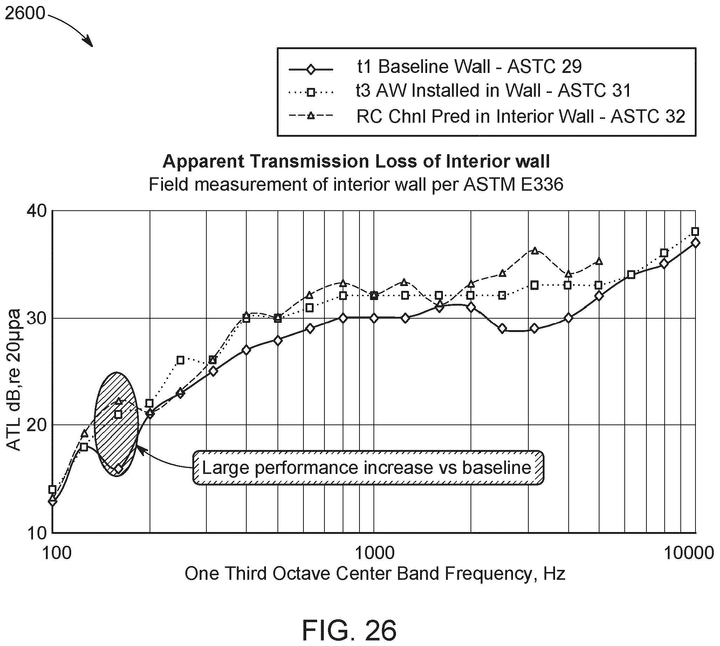

In the graph 2600 of FIG. 26, the plotted data compares the baseline apparent sound transmission loss (per the ASTM E336 and E413 standards) for an interior wall, the measured apparent sound transmission loss for the interior wall, and a prediction of the RC-1 resilient channel performance for the interior wall.

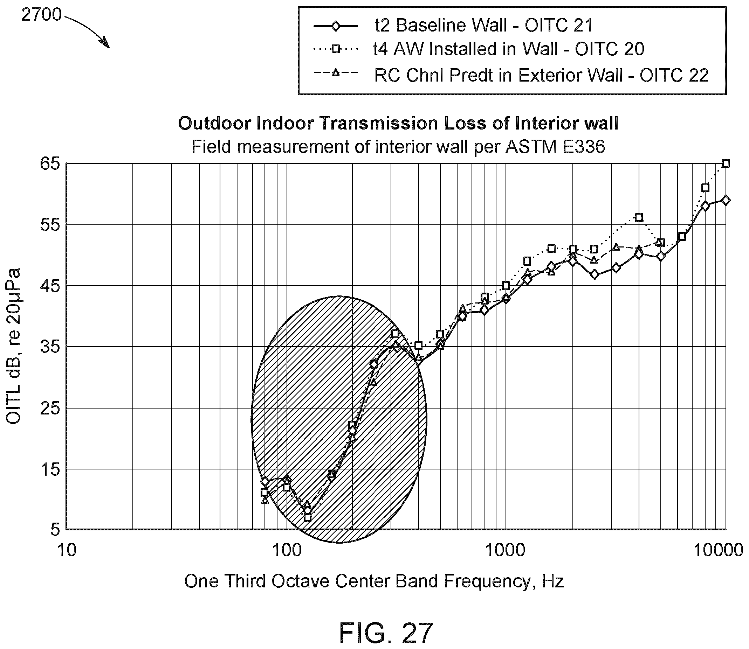

In the graph 2700 of FIG. 27, the plotted data compares the baseline apparent sound transmission loss (per the ASTM E336 and E413 standards) for an exterior wall, the measured apparent sound transmission loss for the exterior wall, and a prediction of the RC-1 resilient channel performance for the exterior wall.

It was also believed that the inventive fasteners would prove effective in isolating spaces/rooms framed with non-wooden studs, such as metal studs, as well. Accordingly, additional testing was done to quantify the performance of the inventive fasteners (i.e., acoustic washers) with other types of stud materials and, again, with reference to the performance of resilient channels.

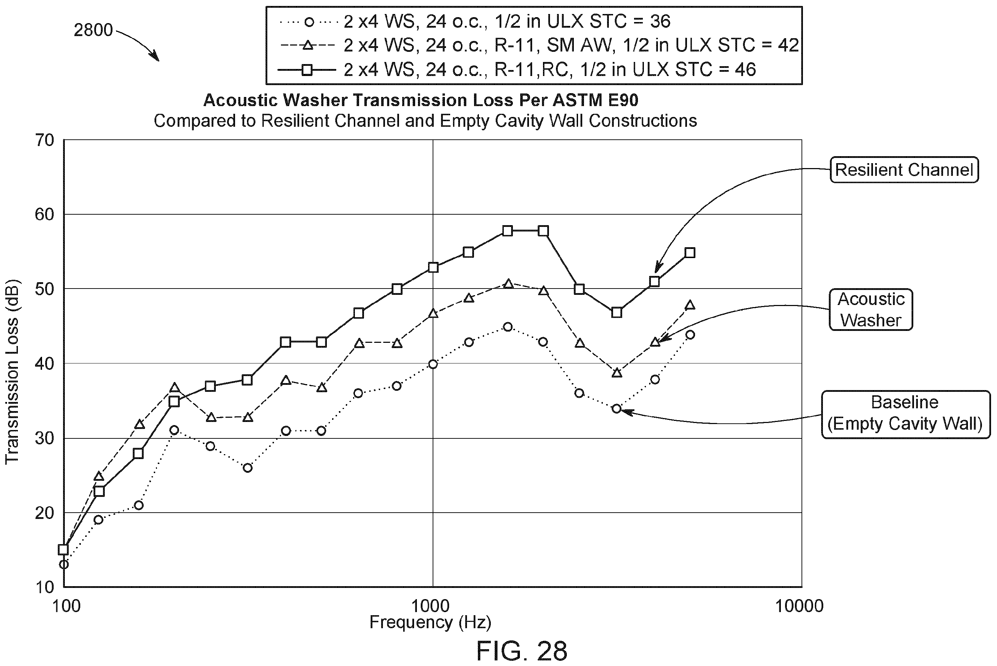

In the graph 2800 of FIG. 28, the test results for an installation using the inventive acoustic washer fasteners on a 2x4 wood stud wall, 24 inches on center stud spacing, were plotted for (1) a single layer of 1/2 inch thick ultralight drywall on each side (baseline - no insulation in cavity wall); (2) a single layer of 1/2 inch thick ultralight drywall on each side, including insulation and resilient channels; and (3) a single layer of 1/2 inch thick ultralight drywall on each side, including insulation and the acoustic washer fasteners.

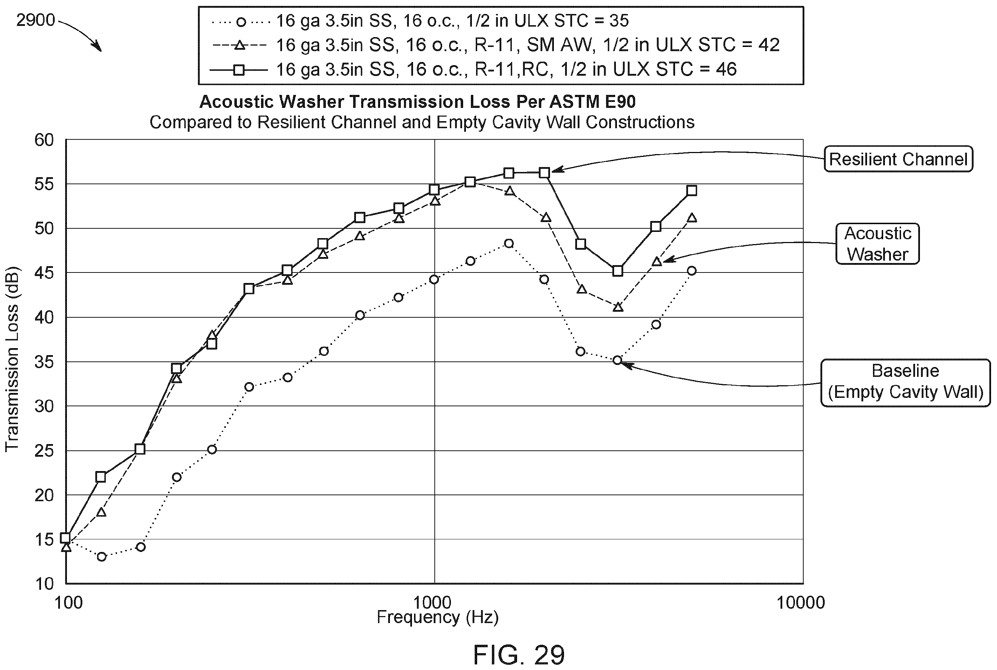

Similarly, in the graph 2900 of FIG. 29, the test results for an installation using the same acoustic washer fasteners (from FIG. 28) on a 16 gauge steel stud wall, 16 inches on center stud spacing, were plotted for (1) a single layer of 1/2 inch thick ultralight drywall on each side (baseline - no insulation in cavity wall); (2) a single layer of 1/2 inch thick ultralight drywall on each side, including insulation and resilient channels; and (3) a single layer of 1/2 inch thick ultralight drywall on each side, including insulation and the acoustic washer fasteners.

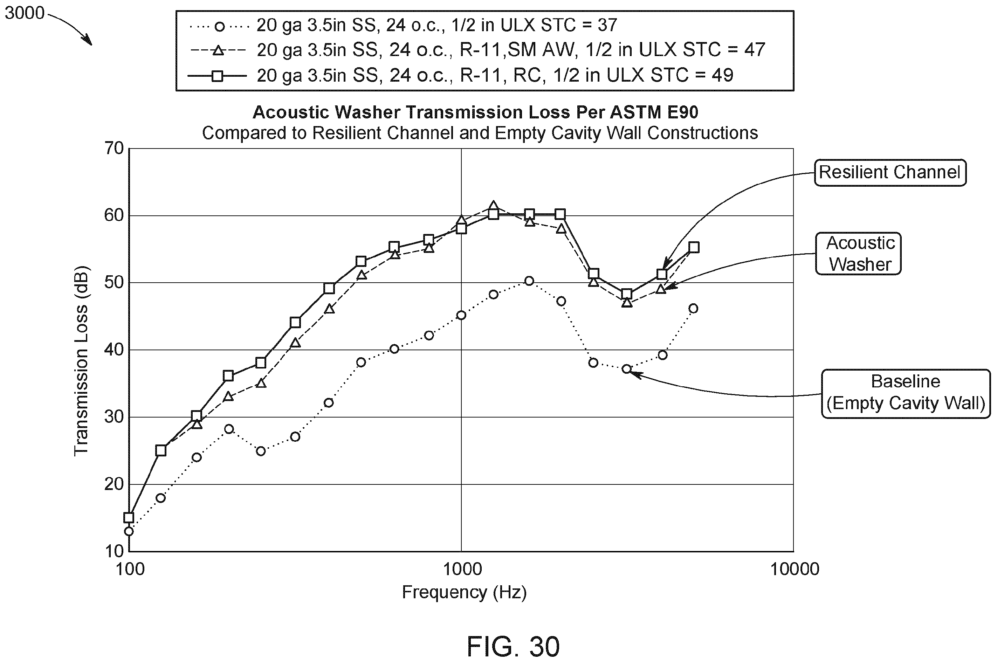

Similarly, in the graph 3000 of FIG. 30, the test results for an installation using the same acoustic washer fasteners (from FIG. 28) on a 20 gauge steel stud wall, 24 inches on center stud spacing, were plotted for (1) a single layer of 1/2 inch thick ultralight drywall on each side (baseline - no insulation in cavity wall); (2) a single layer of 1/2 inch thick ultralight drywall on each side, including insulation and resilient channels; and (3) a single layer of 1/2 inch thick ultralight drywall on each side, including insulation and the acoustic washer fasteners.

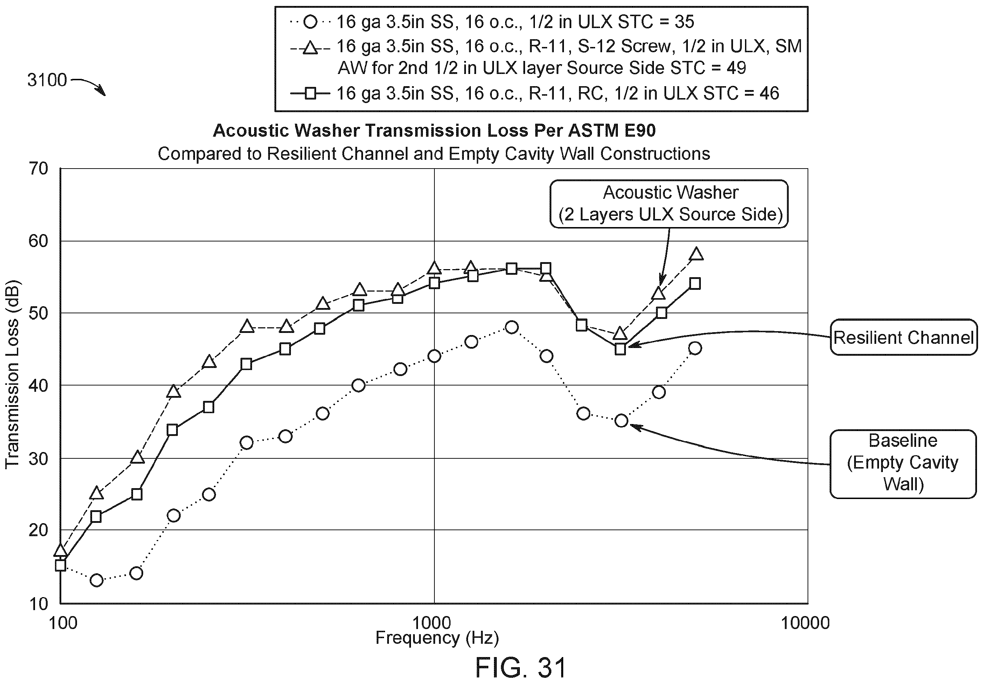

Additionally, in the graph 3100 of FIG. 31, the test results for an installation using the same acoustic washer fasteners (from FIG. 28) on a 16 gauge steel stud wall, 16 inches on center stud spacing, were plotted for (1) a single layer of 1/2 inch thick ultralight drywall on each side (baseline - no insulation in cavity wall); (2) a single layer of 1/2 inch thick ultralight drywall on each side, including insulation and resilient channels; and (3) a single layer of 1/2 inch thick ultralight drywall on the receiving room side, insulation and the base layer of ultralight drywall with acoustic washer fasteners, along with an additional layer of drywall as the face layer with 1 inch long S-12 drywall screws on the source room side.

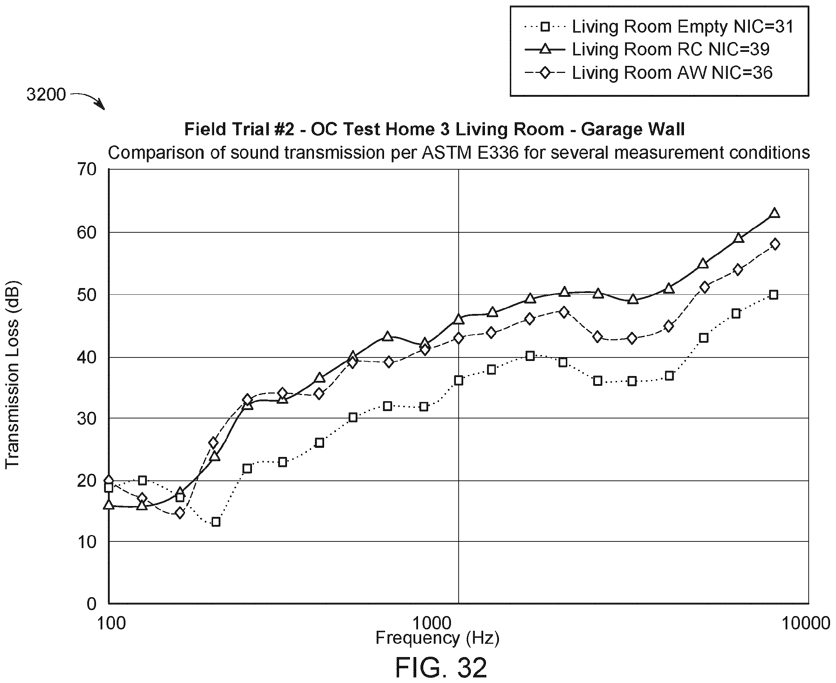

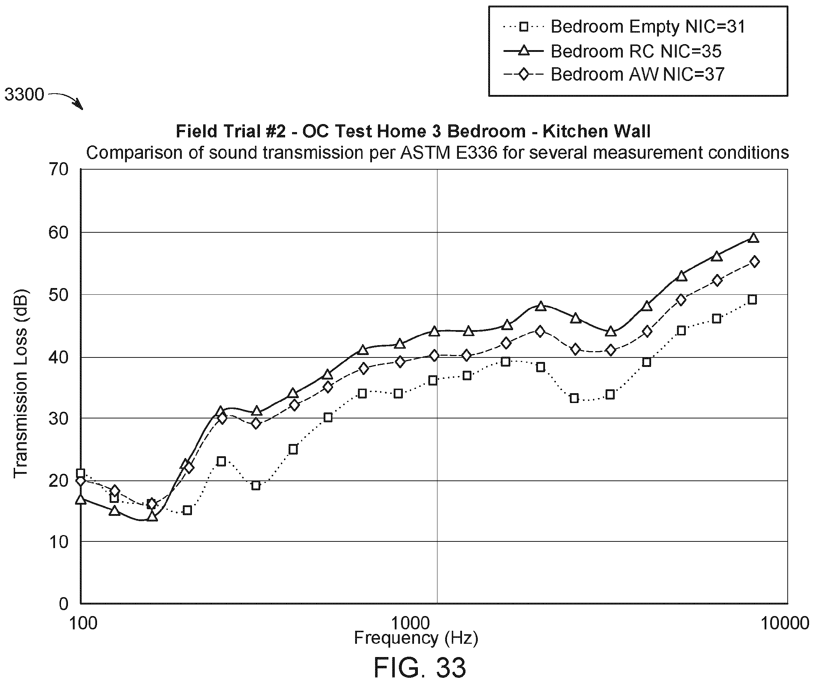

Additional field testing of the inventive fasteners was also performed in a residential ranch-style home, using the aforementioned interior testing arrangement. In this case, measurements of the sound transmission through a first wall separating a living room and a garage (see FIG. 32) and a second wall separating a kitchen and a bedroom (see FIG. 33) were taken. These results show potential inconstancy in the resilient channel installation, notwithstanding that it was installed by experienced installers. The results also show relatively consistent performance by the acoustic washers installation.

In the graph 3200 of FIG. 32, the plotted data compares the measured sound transmission loss (per the ASTM E336 and E413 standards) for the empty living room-garage wall, the measured sound transmission loss for the living room-garage wall including a resilient channel installation, and the measured sound transmission loss for the living room-garage wall including an acoustic washer installation.

In the graph 3300 of FIG. 33, the plotted data compares the measured sound transmission loss (per the ASTM E336 and E413 standards) for the empty kitchen-bedroom wall, the measured sound transmission loss for the kitchen-bedroom including a resilient channel installation, and the measured sound transmission loss for the kitchen-bedroom wall including an acoustic washer installation.

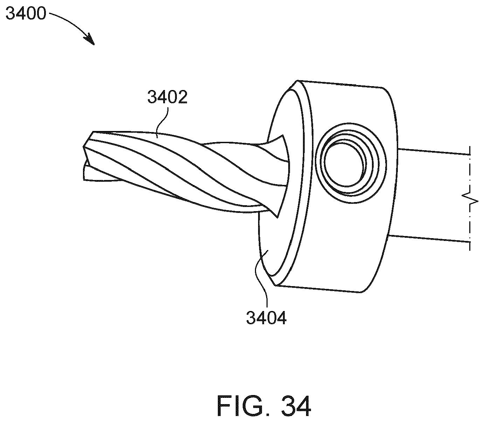

In some exemplary embodiments, a particular tool (e.g., shaped drill bit) could be used to make the holes through the drywall for receiving the fasteners (e.g., the screw and sleeve assemblies 800) therein. In some exemplary embodiments, such as those involving a conically-shaped elastomeric sleeve, a tapered (e.g., five degree) end mill 3400, as shown in FIG. 34, could be used to form the holes in the drywall. The end mill 3400 includes a cutting shank 3402 that is .25 inches (6.35 mm) wide at its far/small end and is used to remove drywall until a flange portion 3404 of the mill 3400 bottoms out on the stud (not shown). The cutting dimensions of the end mill 3400 could be selected to correspond to the dimensions of the sleeve of the modified screw.

In some exemplary embodiments, a tool 3500 allows an installer to form/core a mounting hole in the drywall panel for subsequent driving of the fastener (i.e., the screw and acoustic washer assembly) into and through the hole to engage the framing member (e.g., stud). The tool 3500 facilitates the effective installation of the fasteners. As many fasteners are required to mount a drywall panel, the tool 3500 is designed as a bit that fits on a power drill to support the efficient installation of the fasteners. The tool 3500 includes a lower sharpened edge to cut a hole in the drywall that is slightly (e.g., 0.010 inches (0.25 mm) to 0.015 inches (0.38 mm)) larger than the size and shape of the acoustic washer/sleeve on the screw, which allows for expansion when the screw compresses the washer/sleeve. The tool 3500 also removes the cut material in an effective manner, while avoiding tearing or fuzzing of the paper facing on the outer sides of the drywall.

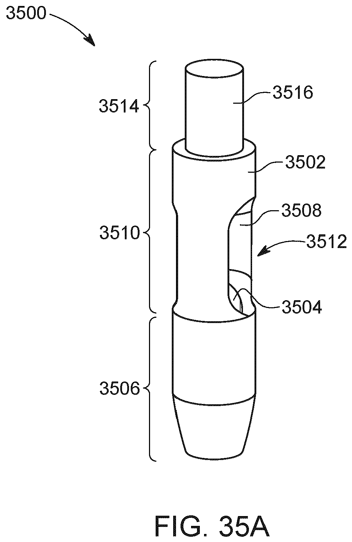

As shown in FIG. 35A, the tool 3500 is a coring bit that has a substantially cylindrical body 3502 with a hollow central passage 3504 extending through a lower portion 3506 of the body 3502. The central passage 3504 reaches a chamber 3508 in a middle portion 3510 of the body 3502. A pair of openings 3512 are formed on opposite sides of the body 3502 to expose the chamber 3508. The middle portion 3510 (including the openings 3512) of the tool 3500 does not enter the drywall during coring thereof. Accordingly, material (e.g., drywall) removed by the tool 3500 can travel through the passage 3504, into the chamber 3508, and out the openings 3512. Finally, an upper portion 3514 of the body 3502 includes any mounting structure, such as a shank 3516, a tang, or the like, for securing the tool 3500 to a driving device, such as a power drill (not shown). The tool 3500 may be made of any suitable material, such as tempered steel, that is able to avoid dulling from repeated use thereof.

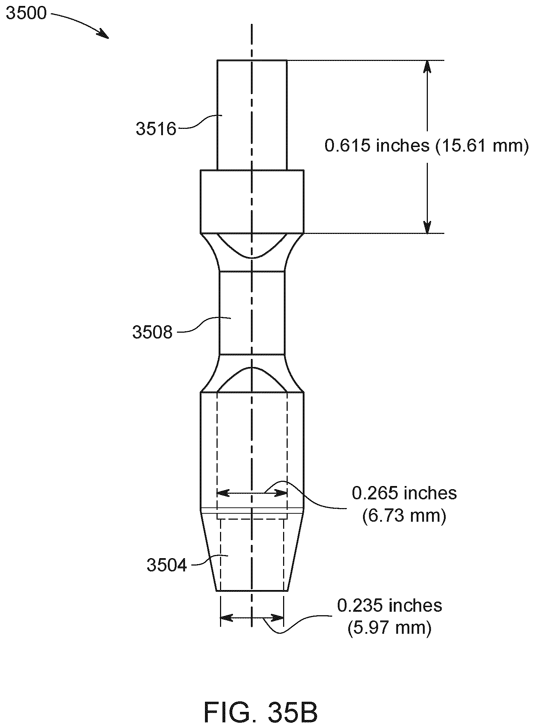

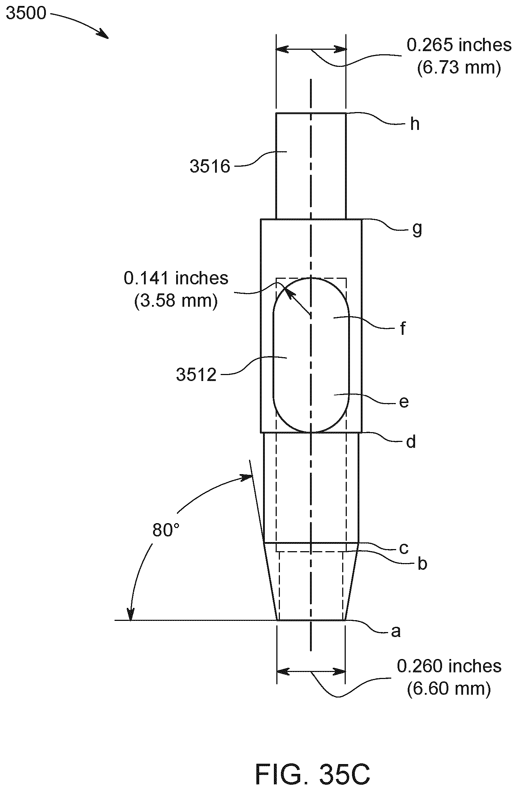

In general, the lower portion 3506 of the tool 3500 will conform to a slightly larger version of the size and shape of the elastomeric sleeve of the modified screw assembly, such as the sleeve shown in FIG. 9B. Thus, by way of example, specific dimensions of the tool 3500 are provided in FIGS. 35B and 35C, with the distances a-to-b = 0.250 inches (6.35 mm); a-to-c = 0.284 inches (7.21 mm); a-to-d = 0.700 inches (17.78 mm); a-to-e = 0.841 inches (21.36 mm); a-to-f = 1.135 inches (28.83 mm); a-to-g = 1.500 inches (38.1 mm); and a-to-h = 1.897 inches (48.18 mm). However, the general inventive concepts should not be limited by any specific dimensions provided for this illustrative embodiment.

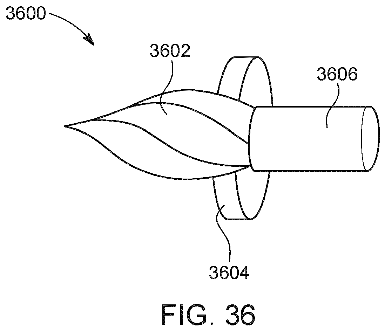

In some exemplary embodiments, another particular tool (e.g., shaped drill bit) could be used to make the holes through the drywall for receiving the fasteners (e.g., the screw and sleeve assemblies 800) therein. In some exemplary embodiments, such as those involving sleeve with a conically-shaped portion, a cutting tool 3600, as shown in FIG. 36, could be used to form the holes in the drywall. The tool 3600 includes a cutting portion 3602 with a bevel washer 3604 adjacent the bottom of the cutting portion 3602 near a driving portion 3606. The tool 3600 could be formed as a unitary body or as a multi-component body. The shape and dimensions of the cutting portion 3602 could be selected to correspond to the dimensions of the sleeve of the modified screw.

In view of the above, the inventive system represents a more affordable acoustical insulation solution that involves a simpler (more routine) installation process. For example, the general inventive concepts contemplate that methods of and systems for acoustically insulating a room or space can involve installing drywall in a routine manner, albeit using the inventive fasteners disclosed or suggested herein in place of conventional drywall screws.

In some embodiments, it may be possible to utilize the various inventive concepts in combination with one another. Additionally, any particular element recited as relating to a particularly disclosed embodiment should be interpreted as available for use with all disclosed embodiments, unless incorporation of the particular element would be contradictory to the express terms of the embodiment. The scope of the general inventive concepts presented herein are not intended to be limited to the particular exemplary embodiments shown and described herein. From the disclosure given, those skilled in the art will not only understand the general inventive concepts and their attendant advantages, but will also find apparent various changes and modifications thereto. For example, while the modified fasteners disclosed herein are based on screw-type fasteners, the elastomeric sleeve could be used with other fasteners (e.g., nail-type fasteners) to obtain the acoustic decoupling described herein. It is sought, therefore, to cover all such changes and modifications as fall within the scope of the general inventive concepts, as described and claimed herein.

## Claims

1. A fastener (800) for securing a wall panel to a framing member, the fastener including:

   a head (702);
   a shaft (704); and
   a sleeve (802),
   wherein the shaft (704) extends from a lower surface of the head (702),
   wherein a first portion (708) of the shaft (704) includes a helical thread,
   wherein the sleeve (802) surrounds a second portion (710) of the shaft (704),
   **characterised in that**:

   the sleeve (802) is made of an elastomeric material having a shore durometer hardness in the range of 10 to 30, and
   a length of the sleeve (802) is in the range of 0.25 inches (6.0 mm) to 1 inch (25.4 mm).

2. The fastener of claim 1, wherein the sleeve (802) is fixed to the second portion (710) of the shaft (704).

3. The fastener of claim 1, wherein at least a portion of the sleeve (802) is a conical frustrum having a first end defining a maximum width (812) of the sleeve (802) and a second end defining a minimum width (814) of the sleeve (802).

4. The fastener of claim 3, wherein the maximum width (812) of the sleeve (802) is: equal to, less than, or greater than, a maximum width of the head (702).

5. The fastener of claim 3, wherein the maximum width (812) of the sleeve (802) is in the range of 0.125 inches (3.0 mm) to 0.5 inches (12.5 mm).

6. The fastener of claim 3, wherein the minimum width (814) of the sleeve (802) is in the range of 0.125 inches (3.0 mm) to less than 0.5 inches (12.5 mm).

7. The fastener of claim 3, wherein the first end (810) of the sleeve (802) abuts the lower surface of the head (702).

8. The fastener of claim 3, wherein a slope ($\theta$) of the conical frustrum from the maximum width (812) to the minimum width (814) is in the range of 3 degrees to 30 degrees.

9. The fastener of claim 1, wherein at least a portion of the sleeve (802) is a cylinder (850) having a diameter that corresponds to the maximum width (812) of the sleeve (802), optionally wherein the cylinder (850) is situated between the head (702) and the conical frustrum (870).

**10.** The fastener of claim 1, wherein a length of the sleeve (802) is: less than, equal to, or greater than, one half the length of the shaft (704).

**11.** The fastener of claim 1, wherein a width of the sleeve (802) is the same along a length of the sleeve (802),

wherein the width of the sleeve (802) is in the range of 0.125 inches (3.0 mm) to 0.5 inches (12.5 mm), and
wherein the length of the sleeve (802) is in the range of 0.25 inches (6.0 mm) to 1 inch (25.4 mm).

**12.** The fastener of claim 1, wherein a length of the shaft (704) is in the range of 0.25 inches (6.0 mm) to 1.625 inches (41.28 mm).

**13.** The fastener of claim 1, wherein an upper surface of the head (702) has an indentation to facilitate rotation of the fastener by a tool that interfaces with the indentation.

**14.** The fastener of claim 1, wherein the framing member is a wall stud.

**15.** The use of a fastener according to any one of claims 1 to 14 for reducing a transfer of vibro-acoustic energy between a wall panel and framing member.

## Patentansprüche

**1.** Befestigungselement (800) zum Sichern einer Wandplatte an einem Rahmenbauteil, wobei das Befestigungselement einschließt:

einen Kopf (702);
eine Welle (704); und
eine Hülse (802),
wobei sich die Welle (704) von einer unteren Oberfläche des Kopfes (702) erstreckt,
wobei ein erster Abschnitt (708) der Welle (704) ein spiralförmiges Gewinde einschließt,
wobei die Hülse (802) einen zweiten Abschnitt (710) der Welle (704) umgibt,
**dadurch gekennzeichnet, dass:**

die Hülse (802) aus einem elastomeren Material, das eine Shore-Durometer-Härte in dem Bereich von 10 bis 30 aufweist, hergestellt ist und
eine Länge der Hülse (802) in dem Bereich von 0,25 Zoll (6,0 mm) bis 1 Zoll (25,4 mm) liegt.

**2.** Befestigungselement nach Anspruch 1, wobei die Hülse (802) an dem zweiten Abschnitt (710) der Welle (704) fixiert ist.

**3.** Befestigungselement nach Anspruch 1, wobei mindestens ein Abschnitt der Hülse (802) ein Kegelstumpf ist, der ein erstes Ende, das eine maximale Breite (812) der Hülse (802) definiert, und ein zweites Ende, das eine minimale Breite (814) der Hülse (802) definiert, aufweist.

**4.** Befestigungselement nach Anspruch 3, wobei die maximale Breite (812) der Hülse (802) gleich, kleiner als oder größer als eine maximale Breite des Kopfes (702) ist.

**5.** Befestigungselement nach Anspruch 3, wobei die maximale Breite (812) der Hülse (802) in dem Bereich von 0,125 Zoll (3,0 mm) bis 0,5 Zoll (12,5 mm) liegt.

**6.** Befestigungselement nach Anspruch 3, wobei die minimale Breite (814) der Hülse (802) in dem Bereich von 0,125 Zoll (3,0 mm) bis kleiner als 0,5 Zoll (12,5 mm) liegt.

**7.** Befestigungselement nach Anspruch 3, wobei das erste Ende (810) der Hülse (802) an der unteren Oberfläche des Kopfes (702) anliegt.

**8.** Befestigungselement nach Anspruch 3, wobei eine Neigung (Θ) des Kegelstumpfes von der maximalen Breite (812) zu der minimalen Breite (814) in dem Bereich von 3 Grad bis 30 Grad liegt.

**9.** Befestigungselement nach Anspruch 1, wobei mindestens ein Abschnitt der Hülse (802) ein Zylinder (850) ist, der einen Durchmesser aufweist, der der maximalen Breite (812) der Hülse (802) entspricht, optional wobei der Zylinder (850) zwischen dem Kopf (702) und dem Kegelstumpf (870) angeordnet ist.

**10.** Befestigungselement nach Anspruch 1, wobei eine Länge der Hülse (802) kleiner als, gleich oder größer als die Hälfte der Länge der Welle (704) ist.

**11.** Befestigungselement nach Anspruch 1, wobei eine Breite der Hülse (802) entlang einer Länge der Hülse (802) dieselbe ist,

wobei die Breite der Hülse (802) in dem Bereich von 0,125 Zoll (3,0 mm) bis 0,5 Zoll (12,5 mm) liegt und
wobei die Länge der Hülse (802) in dem Bereich von 0,25 Zoll (6,0 mm) bis 1 Zoll (25,4 mm) liegt.

**12.** Befestigungselement nach Anspruch 1, wobei eine Länge der Welle (704) in dem Bereich von 0,25 Zoll (6,0 mm) bis 1,625 Zoll (41,28 mm) liegt.

**13.** Befestigungselement nach Anspruch 1, wobei eine obere Oberfläche des Kopfes (702) eine Kerbe aufweist, um eine Drehung des Befestigungselements durch ein Werkzeug, das mit der Kerbe zusammenwirkt, zu ermöglichen.

**14.** Befestigungselement nach Anspruch 1, wobei das Rahmenbauteil ein Wandpfosten ist.

**15.** Verwendung eines Befestigungselements nach einem der Ansprüche 1 bis 14 zum Verringern einer Übertragung von vibroakustischer Energie zwischen einer Wandplatte und einem Rahmenbauteil.

**Revendications**

**1.** Élément de fixation (800) pour la fixation d'un panneau mural à un élément de charpente, l'élément de fixation comportant :

une tête (702) ;
une tige (704) ; et
un manchon (802),
dans lequel la tige (704) s'étend à partir d'une surface inférieure de la tête (702),
dans lequel une première partie (708) de la tige (704) comporte un filetage hélicoïdal,
dans lequel le manchon (802) entoure une seconde partie (710) de la tige (704),
**caractérisé en ce que :**

le manchon (802) est constitué d'un matériau élastomère ayant une dureté durométrique shore comprise dans la plage de 10 à 30, et
une longueur du manchon (802) est comprise entre 0,25 pouce (6,0 mm) et 1 pouce (25,4 mm).

**2.** Élément de fixation selon la revendication 1, dans lequel le manchon (802) est fixé à la seconde partie (710) de la tige (704).

**3.** Élément de fixation selon la revendication 1, dans lequel au moins une partie du manchon (802) est un tronc de cône ayant une première extrémité définissant une largeur maximale (812) du manchon (802) et une seconde extrémité définissant une largeur minimale (814) du manchon (802).

**4.** Élément de fixation selon la revendication 3, dans lequel la largeur maximale (812) du manchon (802) est : égale, inférieure ou supérieure à une largeur maximale de la tête (702).

**5.** Élément de fixation selon la revendication 3, dans lequel la largeur maximale (812) du manchon (802) est comprise entre 0,125 pouce (3,0 mm) et 0,5 pouce (12,5 mm).

**6.** Élément de fixation selon la revendication 3, dans lequel la largeur minimale (814) du manchon (802) est comprise entre 0,125 pouce (3,0 mm) et moins de 0,5 pouce (12,5 mm).

**7.** Élément de fixation selon la revendication 3, dans lequel la première extrémité (810) du manchon (802) vient en butée contre la surface inférieure de la tête (702).

**8.** Élément de fixation selon la revendication 3, dans lequel une pente (Θ) du tronc de cône de la largeur maximale (812) à la largeur minimale (814) est comprise entre 3 degrés et 30 degrés.

**9.** Élément de fixation selon la revendication 1, dans lequel au moins une partie du manchon (802) est un cylindre (850) ayant un diamètre qui correspond à la largeur maximale (812) du manchon (802), éventuellement dans lequel le cylindre (850) est situé entre la tête (702) et le tronc de cône (870).

**10.** Élément de fixation selon la revendication 1, dans lequel une longueur du manchon (802) est : inférieure, égale ou supérieure à la moitié de la longueur de la tige (704).

**11.** Élément de fixation selon la revendication 1, dans lequel une largeur du manchon (802) est la même le long d'une longueur du manchon (802),

dans lequel la largeur du manchon (802) est comprise dans la plage de 0,125 pouce (3,0 mm) à 0,5 pouce (12,5 mm), et
dans lequel la longueur du manchon (802) est comprise entre 0,25 pouce (6,0 mm) et 1 pouce (25,4 mm).

**12.** Élément de fixation selon la revendication 1, dans lequel une longueur de la tige (704) est comprise entre 0,25 pouce (6,0 mm) et 1,625 pouce (41,28 mm).

**13.** Élément de fixation selon la revendication 1, dans lequel une surface supérieure de la tête (702) présente une indentation pour faciliter la rotation de l'élément de fixation par un outil qui s'interface avec l'indentation.

**14.** Élément de fixation selon la revendication 1, dans lequel l'élément de charpente est un montant mural.

**15.** Utilisation d'un élément de fixation selon l'une quelconque des revendications 1 à 14 pour réduire un transfert d'énergie vibro-acoustique entre un panneau mural et un élément de charpente.

100
102
106
108
104
104
110
102

FIG. 1
(PRIOR ART)

200
204
Z
206
202

FIG. 2A
(PRIOR ART)

200
204
$F_W$
$F_W$
$F_W$
202
$F_S$
$F_S$
$F_S$
$F_S$
206
DETAIL Z

FIG. 2B
(PRIOR ART)

200
Drywall Bending Wave
210
$M_S$
206
202
$M_W$
204
Stud Neutral Axis
212

FIG. 2C
(PRIOR ART)

EcoTouch® SAB - STC= 53

300
ASTM E90 Test Data - Wall Construction:
Double Layers of 5/8" Type X GWB, 3.625" 20 ga
Steel Stud, 24" oc Cavity Fills Listed in Legend
Transmission Loss (dB)
65
60
55
50
45
40
35
30
25
20
15
10
100
1000
10000
Frequency (Hz)

FIG. 3
(PRIOR ART)

400
Transmission Loss (dB)
STC 32
Flanking Limit
60
55
50
45
40
35
30
25
20
15
10
5
0
Sound Transmission Loss (dB)
63
125
250
500
1000
2000
4000
Frequency (Hz)

FIG. 4
(PRIOR ART)

500

EcoTouch® R19 - STC= 38
24" o.c. Resilient Channel - STC= 47
ASTM E90 Test Data - Wall Construction:
Ultralight 1/2" GWB, 6.0" 20 ga Steel Stud, 16" oc, Ultralight 1/2" GWB Cavity Fills Listed in Legend
Transmission Loss (dB)
65
55
45
35
25
15
5
10
100
1000
10000
Frequency (Hz)
Increase of 9 dB @ 125Hz
(STC Increase = 9)

FIG. 5
(PRIOR ART)

600
606
602
606
610
604

FIG. 6A
(PRIOR ART)

600
610
602
606
604
606

FIG. 6B
(PRIOR ART)

600
606
602
606
604
610

FIG. 6C
(PRIOR ART)

700
702
710
704
Ls
708
706

FIG. 7
(PRIOR ART)

800
702
Le
θ
802
704
708
Ls
706
804

FIG. 8

802
812
810
816
Le
θ
814

FIG. 9A

802
812
810
850
$L_1$
Le
870
$L_2$
816
θ
814

FIG. 9B

1050
1058
1054
2"x6" Stud
1056
1062
1060
1052
1052

FIG. 10

1100
Vertical Strength Test
Weight [lbs]
60
50
40
30
20
10
0
1 1 Bare Screw
2 D10 Cyl.5"
3 D30 Cyl.5"
4 D30 Con.5"
5 D30 Con.625"

FIG. 11

1200
Reverberant Chamber Wall
Reverberation Chamber (Acoustic Source)
1206
1202
1204
1214 Accelerometer Locations
1222 Acoustic Washer
Microphone
1212
1210
1208
Acquisition System
1220

FIG. 12

1300
140
100
60
20
-20
-60
-100
-140
300
200
150
100
70
50
30
25
20
10
7
5
3
Baseline - Std Wall
A
B

FIG. 13-1

B
C

FIG. 13-2

A
D
2
1.5
1
0.7
0.5
0.3
0.1
0.15
0.1
70m
50m
30m
20m
15m
10m
7m
5m
3m
2m
1.5m
1m
3000
5000
500
1
1.5
2
2.5


FIG. 13-3

C
D
Resilient Channel
3
3.5
4
4.5
5

FIG. 13-4

1400
140
100
60
20
-20
-60
-100
-140
300
200
150
100
70
50
30
20
15
10
7
5
A
B

FIG. 14-1

B
C

FIG. 14-2

30 Durometer Conical @ 1/2
10 Durometer Conical @ 5/8 in
A
D
400
800
1.2k
3
2
1.5
1
0.7
0.5
0.3
0.2
0.15m
0.1m
70m
50m
30m
20m
15m
10m
7m
5m
3m
2m
1.5m
1m
3000
5000

FIG. 14-3

C
30 Durometer
Cylindrical @ 5/8 in
D
30 Durometer
Conical @ 5/8 in
1.6k
2k
2.4k
[Hz]

FIG. 14-4

1500
140
100
60
20
-20
-60
-100
-140
300
200
150
100
70
50
30
25
20
10
A
B

FIG. 15-1

B
C

FIG. 15-2

A
D
Bare Drywall Screw
Resilient Channel
10 Durometer Conical @ 5/8 in
7
5
3
2
1.5
1
0.7
0.5
0.3
0.2
0.15
0.1
70m
50m
30m
20m
15m
10m
7m
5m
3m
2m
1.5m
1m
3000
5000
500
1k
1.5k
2k
2.5k
[Hz]


FIG. 15-3

C
D
3k
3.5k
4k
4.5k
5k


FIG. 15-4

1600
Acoustic Washer & Screw (2 Pks)
1612
1604
1602
1616
Test Wall
Load Cell
Shaker
1610
Accelerometer Locations
1608
1620
1606
1614

FIG. 16

1602
1612
1604
1608
1614
x
1604
1608
1612
25.5"
16"
TYP
33.5"

FIG. 17

Baseline
RC Channel
30 Dur 5 Deg
12 Duro 5 Deg
15 Duro 5 Deg
25 Duro 5 Deg
10 Duro 5 Deg
18 Duro 5 Deg
20 Duro 5 Deg
1800
Acoustic Washer Isolation - 5 Degree Draft
Vibro-Acoustic analysis of energy transfer across a wall measured in one-third octave bands
Transfer Function [(m/s2)/N]
4.00
3.50
3.00
2.50
2.00
1.50
1.00
0.50
0.00
100
1,000
10,000
Frequency (Hz)


FIG. 18

1900

Baseline
RC Channel
20 Duro 10 Deg
10 Duro 10 Deg
25 Duro 10 Deg
18 Duro 10 Deg
30 Duro 10 Deg
12 Duro 10 Deg
15 Duro 10 Deg
Acoustic Washer Isolation-10 Degree Draft
Vibro-Acoustic analysis of energy transfer across a wall measured in one-third octave bands
Transfer Function [(m/s2)/N]
4.0
3.5
3.0
2.5
2.0
1.5
1.0
0.5
0.0
100
1,000
10,000
Frequency (Hz)

FIG. 19

Baseline
RC Channel
15 Duro 15 Deg
30 Duro 15 Deg
10 Duro 15 Deg
25 Duro 15 Deg
18 Duro 15 Deg
12 Duro 15 Deg
20 Duro 15 Deg
2000
Acoustic Washer Isolation- 15 Degree Draft
Vibro-Acoustic analysis of energy transfer across a wall measured in one-third octave bands
Transfer Function [(m/s²)/N]
4.0
3.5
3.0
2.5
2.0
1.5
1.0
0.5
0.0
100
1,000
10,000
Frequency (Hz)

FIG. 20

2100
Baseline
RC Channel
18 Duro 20 Deg
12 Duro 20 Deg
30 Duro 20 Deg
15 Duro 20 Deg
25 Duro 20 Deg
10 Dur 20 Deg
20 Duro 20 Deg
Acoustic Washer Isolation - 20 Degree Draft
Vibro-Acoustic analysis of energy transfer across a wall measured in one-third octave bands
Transfer Function [(m/s²)/N]
5.0
4.5
4.0
3.5
3.0
2.5
2.0
1.5
1.0
0.5
0.0
100
1,000
10,000
Frequency (Hz)

FIG. 21

2200
5 Degree
10 Degree
15 Degree
20 Degree
Acoustic Washer Isolation @ 125 Hz
Vibro-Acoustic analysis of energy transfer across a wall measured in one-third octave bands
Baseline (Std Residential Wall)
Resilient Channel (Std Residential Wall)
Transfer Function [(m/s2)/N]
5.0
4.5
4.0
3.5
3.0
2.5
2.0
1.5
1.0
0.5
0.0
10
12
15
18
20
25
30
Baseline
RC
Durometer

FIG. 22

2300
5 Degree
10 Degree
15 Degree
20 Degree
Acoustic Washer Isolation @ 2000 Hz
Vibro-Acoustic analysis of energy transfer across a wall measured in one-third octave bands
Baseline (Std Residential Wall)
Resilient Channel (Std Residential Wall)
Transfer Function [(m/s$^2$)/N]
4.0
3.5
3.0
2.5
2.0
1.5
1.0
0.5
0.0
10
12
15
18
20
25
30
Baseline
RC
Durometer

FIG. 23

2400
5 Degree
10 Degree
15 Degree
20 Degree
Acoustic Washer Isolation @ 2500 Hz
Vibro-Acoustic analysis of energy transfer across a wall measured in one-third octave bands
Baseline (Std Residential Wall)
Resilient Channel (Std Residential Wall)
Transfer Function [(m/s²)/N]
2.5
2.0
1.5
1.0
0.5
0.0
10
12
15
18
20
25
30
Baseline
RC
Durometer

FIG. 24

2500
2504
Room 2
Room 1
2502
2508
2510
2512
2506
2514
2516

FIG. 25

2600
t1 Baseline Wall - ASTC 29
t3 AW Installed in Wall - ASTC 31
RC Chnl Pred in Interior Wall - ASTC 32
Apparent Transmission Loss of Interior wall
Field measurement of interior wall per ASTM E336
Large performance increase vs baseline
ATL dB,re 20μpa
40
30
20
10
100
1000
10000
One Third Octave Center Band Frequency, Hz

FIG. 26

2700
t2 Baseline Wall - OITC 21
t4 AW Installed in Wall - OITC 20
RC Chnl Predt in Exterior Wall - OITC 22
Outdoor Indoor Transmission Loss of Interior wall
Field measurement of interior wall per ASTM E336
OITL dB, re 20uPa
65
55
45
35
25
15
5
10
100
1000
10000
One Third Octave Center Band Frequency, Hz

FIG. 27

2800
2 x4 WS, 24 o.c., 1/2 in ULX STC = 36
2 x4 WS, 24 o.c., R-11, SM AW, 1/2 in ULX STC = 42
2 x4 WS, 24 o.c., R-11,RC, 1/2 in ULX STC = 46
Acoustic Washer Transmission Loss Per ASTM E90
Compared to Resilient Channel and Empty Cavity Wall Constructions
Resilient Channel
Acoustic Washer
Baseline (Empty Cavity Wall)
Transmission Loss (dB)
70
60
50
40
30
20
10
100
1000
10000
Frequency (Hz)


FIG. 28

2900
16 ga 3.5in SS, 16 o.c., 1/2 in ULX STC = 35
16 ga 3.5in SS, 16 o.c., R-11, SM AW, 1/2 in ULX STC = 42
16 ga 3.5in SS, 16 o.c., R-11,RC, 1/2 in ULX STC = 46
Acoustic Washer Transmission Loss Per ASTM E90
Compared to Resilient Channel and Empty Cavity Wall Constructions
Transmission Loss (dB)
60
55
50
45
40
35
30
25
20
15
10
100
1000
10000
Frequency (Hz)
Resilient Channel
Acoustic Washer
Baseline (Empty Cavity Wall)

FIG. 29

3000
20 ga 3.5in SS, 24 o.c., 1/2 in ULX STC = 37
20 ga 3.5in SS, 24 o.c., R-11,SM AW, 1/2 in ULX STC = 47
20 ga 3.5in SS, 24 o.c., R-11, RC, 1/2 in ULX STC = 49
Acoustic Washer Transmission Loss Per ASTM E90
Compared to Resilient Channel and Empty Cavity Wall Constructions
Transmission Loss (dB)
70
60
50
40
30
20
10
100
1000
10000
Frequency (Hz)
Resilient Channel
Acoustic Washer
Baseline (Empty Cavity Wall)


FIG. 30

3100
16 ga 3.5in SS, 16 o.c., 1/2 in ULX STC = 35
16 ga 3.5in SS, 16 o.c., R-11, S-12 Screw, 1/2 in ULX, SM AW for 2nd 1/2 in ULX layer Source Side STC = 49
16 ga 3.5in SS, 16 o.c., R-11, RC, 1/2 in ULX STC = 46
Acoustic Washer Transmission Loss Per ASTM E90
Compared to Resilient Channel and Empty Cavity Wall Constructions
Transmission Loss (dB)
70
60
50
40
30
20
10
100
1000
10000
Frequency (Hz)
Acoustic Washer
(2 Layers ULX Source Side)
Resilient Channel
Baseline
(Empty Cavity
Wall)

FIG. 31

Living Room Empty NIC=31
Living Room RC NIC=39
Living Room AW NIC=36
3200
Field Trial #2 - OC Test Home 3 Living Room - Garage Wall
Comparison of sound transmission per ASTM E336 for several measurement conditions
Transmission Loss (dB)
70
60
50
40
30
20
10
0
100
1000
10000
Frequency (Hz)

FIG. 32

Bedroom Empty NIC=31
Bedroom RC NIC=35
Bedroom AW NIC=37
3300
Field Trial #2 - OC Test Home 3 Bedroom - Kitchen Wall
Comparison of sound transmission per ASTM E336 for several measurement conditions
Transmission Loss (dB)
70
60
50
40
30
20
10
0
100
1000
10000
Frequency (Hz)

FIG. 33

3400
3402
3404

FIG. 34

3500
3514
3516
3502
3510
3508
3512
3504
3506

FIG. 35A

3500
3516
0.615 inches (15.61 mm)
3508
0.265 inches
(6.73 mm)
3504
0.235 inches
(5.97 mm)

FIG. 35B

3500
0.265 inches
(6.73 mm)
h
3516
g
0.141 inches
(3.58 mm)
f
3512
e
d
80°
c
b
a
0.260 inches
(6.60 mm)

FIG. 35C

3600
3602
3606
3604

FIG. 36

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63113235
- EP 3176448 B